(19) Europäisches Patentamt
European Patent Office
Office européen des brevets

(11) EP 3 832 763 A1

(12) # EUROPEAN PATENT APPLICATION
published in accordance with Art. 153(4) EPC

(43) Date of publication:
**09.06.2021 Bulletin 2021/23**

(21) Application number: **19845225.2**

(22) Date of filing: **30.07.2019**

(51) Int Cl.:
***H01M 4/58*** *(2010.01)* ***H01G 11/30*** *(2013.01)*
***H01G 11/62*** *(2013.01)* ***H01M 4/136*** *(2010.01)*
***H01M 4/1397*** *(2010.01)* ***H01M 4/62*** *(2006.01)*
***H01M 6/16*** *(2006.01)* ***H01M 10/054*** *(2010.01)*
***H01M 10/0568*** *(2010.01)* ***H01M 12/08*** *(2006.01)*

(86) International application number:
**PCT/JP2019/029725**

(87) International publication number:
**WO 2020/027079 (06.02.2020 Gazette 2020/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **31.07.2018 JP 2018144113**

(71) Applicant: **FUJIFILM Wako Pure Chemical Corporation**
**Osaka 540-8605 (JP)**

(72) Inventors:
- **SATO, Kazuhiko**
**Kawagoe-shi, Saitama 350-1101 (JP)**
- **MIZUTA, Hironori**
**Kawagoe-shi, Saitama 350-1101 (JP)**
- **OKAMOTO, Kuniaki**
**Kawagoe-shi, Saitama 350-1101 (JP)**

(74) Representative: **Hinkelmann, Klaus**
**Patentanwaltskanzlei Hinkelmann**
**Lyonel-Feininger-Strasse 28**
**80807 München (DE)**

(54) **POSITIVE ELECTRODE ACTIVE MATERIAL FOR MAGNESIUM BATTERIES**

(57) The present invention has an object to provide a positive electrode active material for a magnesium battery; and a magnesium battery which has a high operating voltage with respect to magnesium and can be repeatedly charged and discharged at a high capacity retention rate, using the positive electrode active material.

The present invention relates to a positive electrode active material for a magnesium battery, containing a compound represented by the general formula (1), a positive electrode material composition for a magnesium battery, a positive electrode for a magnesium battery, and a magnesium battery:

$$Ag_pSO_4 \qquad (1)$$

[in the formula (1), p satisfies $0 < p \leq 2$].

EP 3 832 763 A1

## Description

### Technical Field

The present invention relates to a positive electrode active material for a magnesium battery; a positive electrode material composition for a magnesium battery, containing the positive electrode active material, a positive electrode for a magnesium battery, and a magnesium battery.

### Background Art

Magnesium has a large electric capacity per unit volume because its ions are multivalent ions. In addition, magnesium is advantageous in that it has a higher melting point and is safer, as compared to lithium, and further in that magnesium resources are relatively evenly distributed on earth and magnesium is inexpensive since the resources are abundant on earth. Therefore, a magnesium battery adopting metallic magnesium as a negative electrode is drawing attention as a next-generation battery replacing a lithium battery.

Although many examples of the magnesium battery have been reported to date, there are not many magnesium batteries that operate stably since it is difficult to diffuse magnesium ions after an active material is inserted. As an example of a magnesium battery in which magnesium ions are reversibly inserted, a magnesium battery in which a Chevrel compound ($Mo_6S_8$) is used in a positive electrode active material, reported by Aurbach et al., is known (Non-Patent Literature 1).

In addition, as an example in which the insertion/deinserition of magnesium ions into an active material is not showed, a magnesium battery in which a charge transfer occurs through the transport of magnesium cations and halogen anions, reported by Zhang et al., is known (Non-Patent Literature 2). The magnesium battery uses silver chloride (AgCl) in a positive electrode active material and operates at a high voltage of about 2.0 V (vs. Mg). In addition, a silver chloride seawater battery using silver chloride as a positive electrode and a magnesium alloy as a negative electrode has been reported (Patent Literature 1).

Citation List

Patent Literature

Patent Literature 1: JP2016-051519A

Non-Patent Literature

Non-Patent Literature 1: Nature, 2000, vol. 407, p. 724-727

Non-Patent Literature 2: Chem. Commun., 2015, vol. 51, p. 1487-1490

### Summary of Invention

Technical Problem

The magnesium battery described in Non-Patent Literature 1 had a problem in that the operating voltage is as low as about 1.1 V (vs. Mg), which is insufficient for practical use. On the other hand, the magnesium battery described in Non-Patent Literature 2 operates at a high voltage, but had a problem in that the decrease in a capacity per cycle is significant in a case where a charge-discharge rate is low. In addition, the seawater battery described in Patent Literature 1 is a primary battery in the first place but is not a battery (secondary battery) which can be repeatedly charged and discharged.

The present invention has been made in view of such circumstances, and has an object to provide a positive electrode active material for a magnesium battery; and a magnesium battery which has a high operating voltage with respect to magnesium and can be repeatedly charged and discharged at a high capacity retention rate, using the positive electrode active material.

Solution to Problem

The present inventors have conducted intensive studies, and as a result, they have found that a magnesium battery using a specific compound such as silver sulfate as a positive electrode active material operates a high voltage of about 2.0 V with respect to magnesium, and has a high capacity retention rate even in a case where repeated charge-discharge is performed, thereby leading to completion of the present invention.
The present invention encompasses the following inventions [i] to [xiii].

[i] A positive electrode active material for a magnesium battery, containing a compound represented by the following general formula (1) (hereinafter sometimes simply referred to as the positive electrode active material of an embodiment of the present invention in some cases):

$$Ag_pSO_4 \qquad (1)$$

[in the general formula (1), p satisfies $0 < p \leq 2$].
[ii] The positive electrode active material according to the invention [i], in which in the general formula (1), p is 2.
[iii] A positive electrode material composition for a magnesium battery, containing the positive electrode active material according to the invention [i] or [ii], a conductive auxiliary agent, and a binder (hereinafter sometimes simply referred to as the positive electrode material composition of an embodiment of the present invention).
[iv] A positive electrode for a magnesium battery, containing the positive electrode active material according to the invention [i] or [ii], a conductive auxiliary agent, a binder, and a current collector (hereinafter sometimes simply referred to as the positive electrode of an embodiment of the present invention).
[v] A magnesium battery containing the positive electrode according to the invention [iv], a negative electrode, and an electrolytic solution (hereinafter sometimes simply referred to as the magnesium battery of an embodiment of the present invention).
[vi] The magnesium battery according to the invention [v], in which the electrolytic solution is a mixture of a compound represented by any one of the following general formulae (I) to (IV), a Lewis acid or a compound represented by the following general formula (A), and a solvent:

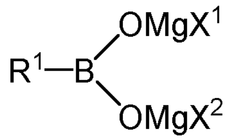

(I)

[in the general formula (I), $X^1$ and $X^2$ each independently represent a chlorine atom or a bromine atom, and
$R^1$ represents an -OMgCl group; an -OMgBr group; an alkyl group having 1 to 6 carbon atoms; an alkoxy group having 1 to 6 carbon atoms; a phenoxy group; an aryl group having 6 to 18 carbon atoms, which has a $-B(OMgCl)_2$ group, a $-B(OMgBr)_2$ group, a halogeno group, an alkyl group, an alkoxy group, a vinyl group, a phenyl group, or a phenoxy group as a substituent or is unsubstituted; or a monocyclic or bicyclic, heterocyclic group which has a $-B(OMgCl)_2$ group, a $-B(OMgBr)_2$ group, a halogeno group, an alkyl group, an alkoxy group, a vinyl group, a phenyl group, or a phenoxy group as a substituent or is unsubstituted];

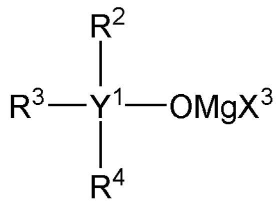

(II)

[in the general formula (II), $Y^1$ represents a carbon atom or a silicon atom,

$X^3$ represents a chlorine atom or a bromine atom,
$R^2$ represents an aryl group having 6 to 10 carbon atoms, which has a halogeno group, an alkyl group, a haloalkyl group, or an alkoxy group as a substituent or is unsubstituted, and
$R^3$ and $R^4$ each independently represent an -OMgCl group; an -OMgBr group; an alkyl group having 1 to 6 carbon atoms, which has a halogeno group or an alkoxy group as a substituent or is unsubstituted; an alkenyl

group having 2 to 6 carbon atoms; or an aryl group having 6 to 10 carbon atoms, which has a halogeno group, an alkyl group, a haloalkyl group, or an alkoxy group as a substituent or is unsubstituted];

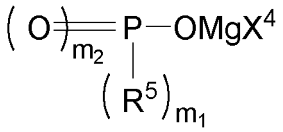
(III)

{in the general formula (III), $m_1$ represents 0 or 2,

in a case of $m_1 = 0$, $m_2$ represents 2, and in a case of $m_1 = 2$, $m_2$ represents 0 or 1,
$X^4$ represents a chlorine atom or a bromine atom,
two $R^5$'s each independently represent an -OMgCl group; an -OMgBr group; an alkyl group having 1 to 6 carbon atoms, which has a halogeno group or an alkoxy group as a substituent or is unsubstituted; an alkoxy group having 1 to 6 carbon atoms; an aryl group having 6 to 10 carbon atoms, which has a halogeno group, an alkyl group, a haloalkyl group, or an alkoxy group as a substituent or is unsubstituted; an aryloxy group having 6 to 10 carbon atoms, which has a halogeno group, an alkyl group, a haloalkyl group, or an alkoxy group as a substituent or is unsubstituted; or a group represented by the following general formula (III-1):

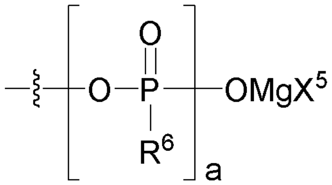
(III-1)

[in the general formula (III-1), a represents an integer of 1 to 3,

$X^5$ represents a chlorine atom or a bromine atom,
a pieces of $R^6$'s each independently represent an -OMgCl group; an -OMgBr group; an alkyl group having 1 to 6 carbon atoms, which has a halogeno group or an alkoxy group as a substituent or is unsubstituted; an alkoxy group having 1 to 6 carbon atoms; an aryl group having 6 to 10 carbon atoms, which has a halogeno group, an alkyl group, a haloalkyl group, or an alkoxy group as a substituent or is unsubstituted; or an aryloxy group having 6 to 10 carbon atoms, which has a halogeno group, an alkyl group, a haloalkyl group, or an alkoxy group as a substituent or is unsubstituted];

two $R^5$'s may form the following general formula (III-2):

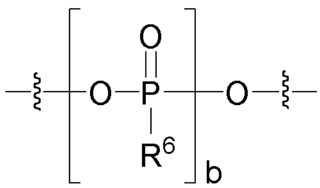
(III-2)

[in the general formula (III-2), b represents an integer of 1 to 3, and $R^6$ is the same as above]};

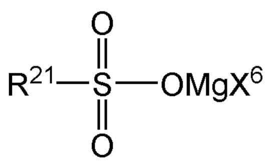
(IV)

[in the general formula (IV), $X^6$ represents a chlorine atom or a bromine atom, and $R^{21}$ represents an alkyl group having 1 to 10 carbon atoms, which has an $-SO_3MgCl$ group or an $-SO_3MgBr$ group as a substituent or is unsubstituted; a haloalkyl group having 1 to 10 carbon atoms, which has an $-SO_3MgCl$ group or an $-SO_3MgBr$ group- as a substituent or is unsubstituted; an aryl group having 6 to 14 carbon atoms, which has an $-SO_3MgCl$ group, an $-SO_3MgBr$ group,

a halogeno group, an alkyl group, or an alkoxy group as a substituent or is unsubstituted; or a biphenyl group which has an $-SO_3MgCl$ group or an $-SO_3MgBr$ group as a substituent or is unsubstituted]; and

$$Mg[N(SO_2R^7)_2]_2 \qquad (A)$$

[in the general formula (A), four $R^7$'s each independently represent an alkyl group having 1 to 6 carbon atoms, a perfluoroalkyl group having 1 to 6 carbon atoms, a phenyl group, or a perfluorophenyl group].

[vii] The magnesium battery according to the invention [v], in which the electrolytic solution is a mixture of a compound represented by the following general formula (I), a Lewis acid, and a solvent:

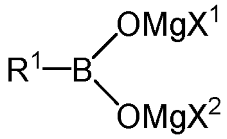

(I)

[in the general formula (I), $X^1$ and $X^2$ each independently represent a chlorine atom or a bromine atom, and $R^1$ represents an -OMgCl group; an -OMgBr group; an alkyl group having 1 to 6 carbon atoms; an alkoxy group having 1 to 6 carbon atoms; a phenoxy group; an aryl group having 6 to 18 carbon atoms, which has a $-B(OMgCl)_2$ group, a $-B(OMgBr)_2$ group, a halogeno group, an alkyl group, an alkoxy group, a vinyl group, a phenyl group, or a phenoxy group as a substituent or is unsubstituted; or a monocyclic or bicyclic, heterocyclic group which has a $-B(OMgCl)_2$ group, a $-B(OMgBr)_2$ group, a halogeno group, an alkyl group, an alkoxy group, a vinyl group, a phenyl group, or a phenoxy group as a substituent or is unsubstituted].

Advantageous Effects of Invention

A magnesium battery produced by using the positive electrode active material of the embodiment of the present invention has an excellent effect of having a high operating voltage with respect to magnesium. In addition, in a case where the magnesium battery of the embodiment of the present invention is used as a secondary battery, it also has an excellent effect of having a high capacity retention rate.

**(Brief Description of Drawings)**

Fig. 1 shows charge-discharge curves of the first, third, and fifth cycles in a charge-discharge test of Experimental Example 1.

Fig. 2 shows charge-discharge curves of the first, third, and fifth cycles in a charge-discharge test of Experimental Example 2.

Fig. 3 shows capacity retention rates after 1 to 5 cycles in the charge-discharge tests of Experimental Example 1 and Experimental Example 2.

Fig. 4 shows charge-discharge curves of the first, third, and fifth cycles in a charge-discharge test of Experimental Example 3.

Fig. 5 shows charge-discharge curves of the first, third, and fifth cycles in a charge-discharge test of Experimental Example 4.

**Description of Embodiments**

**Positive Electrode Active Material of Embodiment of Present Invention**

The positive electrode active material of the embodiment of the present invention is a positive electrode active material used in a positive electrode of a magnesium battery, in which the positive electrode active material contains at least one kind of a compound represented by the general formula (1) (hereinafter sometimes simply referred to as the compound according to the present invention). That is, the positive electrode active material of the embodiment of the present invention is a positive electrode active material consisting of one kind or two or more kinds of the compound according to the present invention, and as necessary, other compounds which will be described later (compounds also used in combination as the positive electrode active material, which are other than the compound according to the present invention), and among these, the positive electrode active material consisting of one kind or two or more kinds

of the compound according to the present invention is preferable, and the positive electrode active material consisting only one kind of the compound according to the present invention is more preferable.

p in the general formula (1) satisfies $0 < p \leq 2$, preferably satisfies $1 \leq p \leq 2$, more preferably satisfies 1 or 2, and is still more preferably 2.

Examples of the compound represented by the general formula (1) include $AgSO_4$ and $Ag_2SO_4$, and $Ag_2SO_4$ is preferable.

The positive electrode active material of the embodiment of the present invention is not limited to a crystal system, but is preferably an orthorhombic crystal; and a crystal structure thereof may be any structure and it does not matter if the structure is amorphous. In addition, the crystal structure may be changed by a physical or chemical treatment or by occluding releasing ions in an electrolytic solution, and may be a part, not the whole. In addition, the positive electrode active material may have a structure in which the position of a peak is changed in X-ray crystal structure analysis by a change in the crystal structure, and may be the one which is treated as confirmed for a change in XPS.

The particle size of the positive electrode active material of the embodiment of the present invention is not particularly limited, but is preferably 10 μm or less, and more preferably 5 μm or less.

As such other compounds (compounds also used as the positive electrode active material, which are other than the compound according to the present invention), known active materials which are usually used as an active material in a magnesium battery (in particular, a magnesium secondary battery), other than the compound according to the present invention, can be used. Specific examples thereof include cobalt, manganese, vanadium, aluminum, iron, silicon, phosphorus, nickel, molybdenum, titanium, tungsten, ruthenium, copper, chromium, lithium, sodium, potassium, rubidium, cesium, beryllium, calcium, strontium, barium, niobium, lanthanoid elements, carbon, sulfur, magnesium, platinum, hafnium, scandium, zirconium, osmium, iridium, gold, mercury, thallium, lead, tin, and antimony; oxides, sulfides, selenides, tellurides, cyanides, halides, borides, silicon oxides, phosphorus oxides, boron oxides, manganese oxides, and sulfates thereof; and double salts thereof. Among these, molybdenum; oxides, sulfides, selenides, tellurides, cyanides, halides, borides, silicon oxides, phosphorus oxides, boron oxides, manganese oxides, and sulfates of molybdenum; or double salts thereof are preferable. In addition, such other compounds may be configured by combination of a plurality of metals and a plurality of compounds, may be doped with a metal such as magnesium and potassium, sulfur, boron, phosphorus, or the like, or may be a hydrate.

Specific examples of the inorganic active materials among such other compounds include active materials constituted with $Mo_6S_8$, $V_2O_5$, $MnO_2$, $Mn_2O_3$, $Mn_3O_4$, $RuO_2$, $TiO_2$, $Co_3O_4$, $MoO_3$, $Co_3O_4$, $CoO$, $CoO_2$, $WO_3$, $PbO_2$, $Pb_3O_4$, $NiFe(CN)_6$, $CuFe(CN)_6$, $Ni[Fe(CN)_6]_{0.7}\cdot 4.7H_2O$, $Cu[Fe(CN)_6]_{0\cdot 7}\cdot 3.6H_2O$, $MgMo_6S_8$, $MgVPO_4F$, $MgFePO_4F$, $MgMnPO_4F$, $MgFePO_4$, $Mg_{0.1}V_2O_5$, $MgNiO_2$, $MgCoO_2$, $MgCo_2O_4$, $TiNb_2O_7$, $Mg_{0.5}Hf_{0.5}Sc_{1.0}(MoO_4)_3$, $MgZrWO_4$, $MgFe_2O_4$, $MgMn_2O_4$, $MgNi_2O_4$, $MgCr_2O_4$, $MgCoSiO_4$, $MgFeSiO_4$, $MgNiSiO_4$, $MgMnSiO_4$, $MgNi_{0.9}Mn_{0.1}SiO_4$, $MgVSiO_4$, $MgCuSiO_4$, $Mg_{1.03}Mn_{0.97}SiO_4$, $MgMnNiO_4$, $MgMn_{1.15}Ni_{0.6}Ti_{0.25}O_4$, $Mg_{0.75}Fe_{0.25}Ca(SiO_3)_2$, $Mg_{0.59}Co_{0.41}CaSiO$, $Mg_{0.71}Fe_{1.29}(SiO_3)_2$, $Mg_{1.88}Fe_{0.12}(SiO_3)_2$, $MgAg_{0.5}Fe_{0.95}Nb_{0.05}O_4$, $Mg_2SiO_4$, $KMnO_4$, $Mg(MnO_4)_2$, $NiCl_2$, $CoCl_2$, $FeCl_2$, $CrCl_2$, $FeF_3$, $MnF_3$, $LaF_3$, NiS, FeS, CuS, CoS, $ZrS_2$, $WS_2$, $CoS_2$, $MoS_2$, $MnS_2$, $NbS_2$, $NbS_3$, $TiS_2$, $TiB_2$, $ZrB_2$, $MoB_2$, $VS_2$, $WSe_2$, $Cu_2Se$, $Mo_9Se_{11}$, NiSSe, $VBO_3$, $TiBO_3$, $MnBO_3$, $CoBO_3$, $V_{0.5}Fe_{0.5}BO_3$, $V_{0.5}Ti_{0.5}BO_3$, $V_{0.5}Ti_{0.3}Fe_{0.2}BO_3$, and $V_2O_5\cdot MgCl_2\cdot P_2O_5$; a salt of a metal cation such as $Fe^{2+}$, $Cu^{2+}$, $Ti^{2+}$, and $Cd^{2+}$ with a polysulfide; boron (B)-doped $Mg_2SiO_4$; a complex of $TiNb_2O_7$ and graphene; an active material having an amorphous structure, synthesized from $KMnO_4$ and hydrochloric acid; a carbon complex of $MoS_2$ and $V_2O_5$; $V_2O_5$ in the form of an aerogel; $Mn_3O_4$ in the form of a nanowire; $MnO_2$ containing water of crystallization; porous $Mn_3O_4$ nanoparticles; $TiS_2$ in the form of a nanotube; potassium-doped K-$\alpha MnO_2$; and Prussian blue analogs.

In addition, for example, sulfur; an organic sulfur compound; a radical compound; an organic compound; a polymer compound; a sulfur-containing polymer compound; a radical polymer; a functional compound; a material forming an electric double layer such as layered carbon, porous carbon, and activated carbon; or the like may be contained as an active material capable of occluding releasing magnesium or magnesium ions in such other compounds. Such the material may contain magnesium in an oxidized form or in a form in mixture with sulfur, phosphorus, boron, or the like. In addition, the material may also be in a partially halogenated form.

Specific examples of the organic active material among such other compounds include Rubeanic acid, 2,5-dimercapto-1,3,4-thiadiazole (DMcT), trioxotriangulene, 2,2,6,6-tetramethyl- 1-piperidinyloxy (TEMPO), 4-hydroxy-2,2,6,6-tetramethylpiperidinyloxy (4-hydroxy-TEMPO), dimethoxybenzoquinone (DMBQ), 9,10-anthraquinone, porphyrin, magnesium porphyrin, phthalocyanine, magnesium phthalocyanine, magnesium anthracene, polyaniline, a polyquinone derivative, a quinone-based polymer, poly(hydroquinoyl-benzoquinonyl sulfide), carbyne polysulfide, poly-2,2'-dithiodianiline (PDTDA), poly(4-methacryloyloxy-2,2,6,6-tetramethylpiperidin-N-oxyl) (PTMA), poly(anthraquinonyl)sulfide, fullerene, S-BUMB18C6, S-UOEE, graphite fluoride, graphite fluoride mixed with copper, and graphene fluoride.

As the compound according to the present invention and the other compounds, those that are commercially available compounds or those that are appropriately synthesized by method known per se may be used.

The content of the compound according to the present invention in the positive electrode active material of the

embodiment of the present invention is at least 50% by mass or more, preferably 80% by mass or more, and more preferably 90% by mass or more, with respect to the total mass of the positive electrode active material.

In a case where the positive electrode active material of the embodiment of the present invention contains two or more kinds of the compound according to the present invention and other compounds, the compounds may be appropriately mixed at a desired ratio.

**Positive Electrode Material Composition of Embodiment of Present Invention**

The positive electrode material composition of the embodiment of the present invention is a composition used in a positive electrode of a magnesium battery, in which the composition contains the positive electrode active material of the embodiment of the present invention, a conductive auxiliary agent, and a binder.

The content of the positive electrode active material of the embodiment of the present invention in the positive electrode material composition of the embodiment of the present invention is not particularly limited, but is, for example, usually from 50% by mass to 98% by mass, preferably from 55% by mass to 90% by mass, and more preferably from 60% by mass to 80% by mass, with respect to the total mass of the composition.

As the conductive auxiliary agent in the positive electrode material composition of the embodiment of the present invention, known conductive auxiliary agents which are usually used in this field can be used. Specific examples thereof include carbon blacks such as acetylene black, ketjen black, furnace black, and thermal black, and acetylene black is preferable. The content of the conductive auxiliary agent is not particularly limited, but is, for example, usually from 1% by mass to 50% by mass, preferably from 5% by mass to 30% by mass, and more preferably from 10% by mass to 20% by mass, with respect to the total mass of the composition. In addition, in a case where two or more kinds of the conductive auxiliary agents are used in combination, a total mass thereof may be the content.

As the binder in the positive electrode material composition of the embodiment of the present invention, known binders which are usually used in this field can be used. Specific examples thereof include binders such as polyvinylidene fluoride (PVDF), polytetrafluoroethylene (PTFE), carboxymethyl cellulose (CMC), a styrene-butadiene copolymer (SBR), an acrylonitrile-butadiene copolymer (NBR), polyacrylonitrile (PAN), an ethylene-vinyl alcohol copolymer (EVOH), polyurethane, polyacrylate, polyvinyl ether, polyamide, and polyimide. The content of the binder is not particularly limited, but is, for example, usually from 1% by mass to 50% by mass, preferably from 5% by mass to 30% by mass, and more preferably from 10% by mass to 20% by mass, with respect to the total mass of the composition. In addition, in a case where two or more kinds of the binders are used in combination, a total mass thereof may be the content.

The positive electrode material composition of the embodiment of the present invention may contain other materials such as a supporting salt and an ion conductive polymer, in addition to the positive electrode active material of the embodiment of the present invention, the conductive auxiliary agent, and the binder.

Examples of the supporting salt include $Li(C_2F_5SO_2)_2N$(LiBETI), $LiPF_6$, $LiBF_4$, $LiClO_4$, $LiAsF_6$, and $LiCF_3SO_3$. Examples of the ion conductive polymer include a polyethylene oxide (PEO)-based polymer and a polypropylene oxide (PPO)-based polymer.

The content of such other materials may be set in accordance with the amount which is usually used in this field.

The positive electrode material composition of the embodiment of the present invention can be produced by appropriately mixing the positive electrode active material of the embodiment of the present invention, a conductive auxiliary agent, a binder, and other materials, as necessary, and above all, the positive electrode material composition is preferably produced by appropriately mixing the components so that the respective contents are be within the ranges.

In addition, the positive electrode material composition of the embodiment of the present invention may be a paste-like or slurry-like composition by the production involving kneading the components in an appropriate solvent. Examples of the solvent include water, N-methyl-2-pyrrolidone (NMP), dimethylformamide, dimethylacetamide, methylformamide, dimethyl sulfoxide, acetonitrile, tetrahydrofuran, γ-butyrolactone, toluene, methyl ethyl ketone, ethyl acetate, and dioxane, and water and NMP are preferable.

**Positive Electrode of Embodiment of Present Invention**

The positive electrode of the embodiment of the present invention is a positive electrode used as a positive electrode of a magnesium battery, in which the positive electrode contains the positive electrode active material of the embodiment of the present invention, a conductive auxiliary agent, a binder, and a current collector. Specifically, it is a positive electrode having an active material layer formed with a current collector and the positive electrode material composition of the embodiment of the present invention formed on a surface thereof, that is, having an active material layer formed with a composition containing the positive electrode active material of the embodiment of the present invention, a conductive auxiliary agent, and a binder.

As the current collector in the positive electrode of the embodiment of the present invention, known current collectors which are usually used in this field can be used. Specific examples of the current collector include current

collectors which are constituted with conductive materials such as platinum, copper, stainless steel (SUS), hastelloy, aluminum, iron, chromium, nickel, titanium, inconel, molybdenum, graphite, and carbon, and have shapes of a plate, a foil (a sheet or a paper), a mesh, an expanded grid (expanded metal), a punched metal, and the like. The mesh opening, the wire diameter, the number of the meshes, and the like of the current collector are not particularly limited. The thickness of the current collector is not particularly limited, but is preferably from 1 μm to 300 μm. The size of the current collector is determined in accordance with the applications where a battery is used. In a case of manufacturing a large size electrode to be used in a large size battery, the current collector having a large area is used, and in a case of manufacturing a small size electrode to be used in a small size battery, the current collector having a small area is used.

The thickness of the active material layer (thickness of the coating layer) in the positive electrode of the embodiment of the present invention is not particularly limited, but is usually from 1 μm to 1,000 μm, preferably from 1 μm to 500 μm, and more preferably from 1 μm to 300 μm.

The positive electrode of the embodiment of the present invention can be produced by applying or crimping the positive electrode material composition of the embodiment of the present invention onto a current collector, followed by drying. In the production method, the amount of the positive electrode material composition of the embodiment of the present invention to be used may be appropriately set so that the active material layer after drying has a desired thickness.

In the method for producing a positive electrode of the embodiment of the present invention, the positive electrode material composition of the embodiment of the present invention may be applied onto a current collector in accordance with a method known per se, and specific examples of the application method include a self-propelled coater, an ink jet method, a doctor blade method, a spray method, and a combination thereof.

In the method for producing a positive electrode of the embodiment of the present invention, the positive electrode material composition of the embodiment of the present invention on the current collector may be dried in accordance with a method known per se, and is usually dried by a heating treatment. The drying condition (a necessity of vacuum, a drying time, or a drying temperature) upon heating may be set as appropriate in accordance with a coating amount or a volatilization speed of the positive electrode material composition of the embodiment of the present invention. As a specific drying method, for example, it may be vacuum-dried at usually 50°C or higher and 150°C or lower, and preferably 70°C or higher and 130°C or lower, for usually 1 hour or longer and 20 hours or shorter, and preferably 3 hours or longer and 12 hours or shorter.

In the method for producing a positive electrode of the embodiment of the present invention, a press treatment may be performed after drying, as necessary. The press treatment may be performed in accordance with a method known per se, specific examples of the press method include a calender roll method and a flat plate press, and the calender roll method is preferable.

**Magnesium Battery of Embodiment of Present Invention**

The magnesium battery of the embodiment of the present invention is a battery containing the positive electrode of the embodiment of the present invention, a negative electrode, and an electrolytic solution.

Furthermore, in the present invention, any of batteries involving a reaction of magnesium in a negative electrode are included in the "magnesium battery". The reaction of magnesium specifically means, for example, dissolution·precipitation of magnesium at an interface between the magnesium metal and the electrolytic solution, a reaction in which magnesium ions are intercalated in a carbon-based material, a reaction in which an element such as bismuth and magnesium is alloyed, and a reaction in which the magnesium ions are occluded·released onto a battery material such as titanium oxide at a low potential such as 1 V or less, for example. Specific examples of the type of magnesium battery include a primary battery, a secondary battery, an air battery, and an electric double layer capacitor, and the secondary battery is preferable.

As the negative electrode in the magnesium battery of the embodiment of the present invention, a negative electrode capable of performing a reaction of magnesium is used. Specific examples thereof include negative electrodes containing a material capable of occluding releasing magnesium ions such as metallic magnesium and magnesium alloy, and metallic magnesium is preferable. Here, the material capable of occluding releasing magnesium ions may be used as a current collector or may also be used as a negative electrode active material.

Specific examples of the magnesium alloy include an Mg-Bi alloy, an Mg-Sb alloy, an Mg-In alloy, an Mg-Zn alloy, an Mg-Zr alloy, an Mg-Sn alloy, an Mg-Cd alloy, an Mg-Co alloy, an Mg-Mn alloy, an Mg-Ga alloy, an Mg-Pb alloy, an Mg-Ni alloy, an Mg-Cu alloy, an Mg-Al alloy, an Mg-Ca alloy, an Mg-Li alloy, an Mg-Bi-Sb alloy, an Mg-Al-Zn alloy, an Mg-Zn-Zr alloy, an Mg-In-Ni alloy, and other alloys containing rare earth elements.

The negative electrode in the magnesium battery of the embodiment of the present invention may contain a current collector, an active material, a conductive auxiliary agent, a binder, a supporting salt, and/or an ion conductive polymer, as necessary, in addition to the material capable of occluding releasing magnesium ions. Specifically, a material capable of occluding releasing magnesium ions may be used as the negative electrode itself, and in a case where the negative electrode has a current collector and a negative electrode material layer formed on a surface thereof, a material

capable of occluding releasing magnesium ions, and as necessary, an active material, a conductive auxiliary agent, a binder, a supporting salt, and/or an ion conductive polymer may be used in the negative electrode material layer. Among these, it is preferable that the material capable of occluding releasing magnesium ions is used as the negative electrode itself. The current collector, the active material, the conductive auxiliary agent, the binder, the supporting salt, and the ion conductive polymer which can be contained in the negative electrode according to the present invention include the same ones as those that can be contained in the positive electrode of the embodiment of the present invention, and preferred ones thereof are also the same.

In a case where a material capable of occluding releasing magnesium ions is used in the negative electrode material layer, a content thereof is at least 50% by mass or more, preferably 80% by mass or more, and more preferably 90% by mass or more, with respect to the total mass of the materials that form the negative electrode material layer. In a case where two or more kinds of the materials capable of occluding releasing magnesium ions are contained, a total mass thereof may be the content.

As the electrolytic solution in the magnesium battery of the embodiment of the present invention, known electrolytic solutions which are usually used in this field can be used. Among these, an electrolytic solution obtained by mixing a compound represented by any one of the general formulae (I) to (IV) which will be described later, a Lewis acid or a compound represented by the general formula (A), and a solvent (hereinafter sometimes simply referred to as the electrolytic solution according to the present invention) is preferable.

In addition, the magnesium battery of the embodiment of the present invention may further have a separator, in addition to the positive electrode of the embodiment of the present invention, the negative electrode, and the electrolytic solution. The separator may be any of those which are capable of electrically insulating a positive electrode and a negative electrode, and transmitting magnesium ions, and examples thereof include a microporous polymer such as a glass fiber and a porous polyolefin. Specific examples of the porous polyolefin include porous polyethylene alone, or a double layer formed by superposing porous polyethylene and porous polypropylene.

**Electrolytic Solution According to Present Invention: Compound Represented by General Formula** (I)

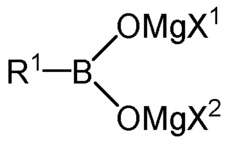

(I)

[in the general formula (I), $R^1$, $X^1$, and $X^2$ are each the same as above].

$X^1$ and $X^2$ of the general formula (I) are each a chlorine atom or a bromine atom, and the chlorine atom is preferable.

The alkyl group having 1 to 6 carbon atoms in $R^1$ in the general formula (I) may be in any of linear, branched, and cyclic forms, and is preferably linear and branched, and more preferably linear. In addition, among the alkyl groups having 1 to 6 carbon atoms, those having 1 to 4 carbon atoms are preferable, and those having 1 or 2 carbon atoms are more preferable. Specific examples of the alkyl groups include a methyl group, an ethyl group, an n-propyl group, an isopropyl group, an n-butyl group, an isobutyl group, a sec-butyl group, a tert-butyl group, an n-pentyl group, and an n-hexyl group, the methyl group, the ethyl group, the n-propyl group, the isopropyl group, the n-butyl group, the isobutyl group, the sec-butyl group, or the tert-butyl group is preferable, the methyl group, the ethyl group, the n-propyl group, or the n-butyl group is more preferable, the methyl group or the ethyl group is still more preferable, and the methyl group is particularly preferable.

The alkoxy group having 1 to 6 carbon atoms in $R^1$ of the general formula (I) may be in any of linear, branched, and cyclic forms, and is preferably linear and branched, and more preferably linear. In addition, among the alkoxy groups having 1 to 6 carbon atoms, an alkoxy group having 1 to 4 carbon atoms is preferable, and an alkoxy group having 1 or 2 carbon atoms is more preferable. Specific examples thereof include a methoxy group, an ethoxy group, an n-propoxy group, an isopropoxy group, an n-butoxy group, an isobutoxy group, a sec-butoxy group, a tert-butoxy group, an n-pentyloxy group, and an n-hexyloxy group, the methoxy group, the ethoxy group, the n-propoxy group, the isopropoxy group, the n-butoxy group, the isobutoxy group, the sec-butoxy group, or the tert-butoxy group is preferable, the methoxy group, the ethoxy group, the n-propoxy group, or the n-butoxy group is more preferable, the methoxy group or the ethoxy group is still more preferable, and the methoxy group is particularly preferable.

Examples of the aryl group having 6 to 18 carbon atoms in $R^1$ of the general formula (I) include a phenyl group, a naphthyl group, and an anthracenyl group, the phenyl group or the naphthyl group is preferable, and the phenyl group is more preferable.

Examples of the halogeno group as a substituent of the aryl group having 6 to 18 carbon atoms in $R^1$ of the general formula (I) include a fluoro group, a chloro group, a bromo group, and an iodo group, and the fluoro group is preferable.

The alkyl group as a substituent of the aryl group having 6 to 18 carbon atoms in $R^1$ of the general formula (I) usually has 1 to 6 carbon atoms, preferably has 1 to 4 carbon atoms, and more preferably has 1 or 2 carbon atoms. In addition, the alkyl group may be in any of linear, branched, and cyclic forms, and is preferably linear and branched, and more preferably linear. Specific examples of the alkyl group include the same ones as the specific examples of the alkyl group having 1 to 6 carbon atoms in $R^1$ of the general formula (I), and preferred ones thereof are also the same.

The alkoxy group as a substituent of the aryl group having 6 to 18 carbon atoms in $R^1$ of the general formula (I) usually has 1 to 6 carbon atoms, preferably has 1 to 4 carbon atoms, and more preferably has 1 or 2 carbon atoms. In addition, the alkoxy group may be in any of linear, branched, and cyclic forms, and is preferably linear and branched, and more preferably linear. Specific examples of the alkoxy group include the same ones as the specific examples of the alkoxy group having 1 to 6 carbon atoms in $R^1$ of the general formula (I), and preferred ones thereof are also the same.

Specific examples of the "aryl group having 6 to 18 carbon atoms, which has a $-B(OMgCl)_2$ group, a $-B(OMgBr)_2$ group, a halogeno group, an alkyl group, an alkoxy group, a vinyl group, a phenyl group, or a phenoxy group as a substituent or is unsubstituted," in $R^1$ of the general formula (I) include groups represented by the following general formulae (1-1) to (1-3), the group represented by the general formula (1-1) or (1-2) is preferable, and the group represented by the general formula (1-1) is more preferable.

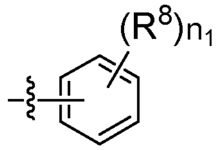

(I-1)

[in the general formula (1-1), $R^8$ represents a $-B(OMgCl)_2$ group, a $-B(OMgBr)_2$ group, a halogeno group, an alkyl group, an alkoxy group, a vinyl group, a phenyl group or a phenoxy group, and $n_1$ represents an integer of 0 to 5].

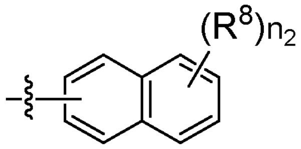

(I-2)

[in the general formula (1-2), $n_2$ represents an integer of 0 to 7, and $R^8$ is the same as above].

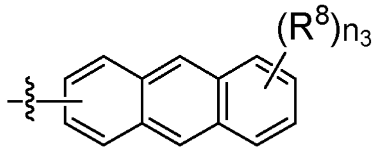

(I-3)

[in the general formula (1-3), $n_3$ represents an integer of 0 to 9, and $R^8$ is the same as above].

Examples of the halogeno group, the alkyl group, and the alkoxy group in $R^8$ of the general formulae (1-1) to (1-3) include the same ones as those of the substituent of the aryl group having 6 to 18 carbon atoms in $R^1$ of the general formula (I), and preferred ones thereof are also the same.

As $R^8$ of the general formulae (1-1) to (1-3), the $-B(OMgCl)_2$ group, the $-B(OMgBr)_2$ group, the halogeno group, an alkyl group having 1 to 6 carbon atoms, an alkoxy group having 1 to 6 carbon atoms, the vinyl group, the phenyl group, or the phenoxy group is preferable; the $-B(OMgCl)_2$ group, the $-B(OMgBr)_2$ group, a fluoro group, a chloro group, a bromo group, an iodo group, a linear alkyl group having 1 to 4 carbon atoms, a linear alkoxy group having 1 to 4 carbon atoms, the vinyl group, the phenyl group, or the phenoxy group is more preferable; the $-B(OMgCl)_2$ group, the-$B(OMgBr)_2$ group, the fluoro group, a methyl group, an ethyl group, a methoxy group, an ethoxy group, the phenyl group, or the phenoxy group is still more preferable; and the $-B(OMgCl)_2$ group, the fluoro group, the methyl group, the methoxy group, the phenyl group, or the phenoxy group is particularly preferable.

$n_1$ of the general formula (1-1) is preferably an integer of 0 to 3, more preferably an integer of 0 to 2, and particularly preferably 0.

$n_2$ of the general formula (1-2) is preferably an integer of 0 to 3, and more preferably 0.

$n_3$ of the general formula (1-3) is preferably an integer of 0 to 3, and more preferably 0.

Specific preferred examples of the group represented by the general formula (1-1) include a phenyl group; a $-C_6H_4-B(OMgCl)_2$ group, a $-C_6H_4-B(OMgBr)_2$ group; a fluorophenyl group, a difluorophenyl group, a trifluorophenyl group; a tolyl group, a xylyl group, a mesityl group, an ethylphenyl group, a diethylphenyl group, a triethylphenyl group; a methoxyphenyl group, a dimethoxyphenyl group, a trimethoxyphenyl group, an ethoxyphenyl group, a diethoxyphenyl group, a triethoxyphenyl group; a biphenyl group; and a phenoxyphenyl group, the phenyl group, the $-C_6H_4-B(OMgCl)_2$ group, the fluorophenyl group, the difluorophenyl group, the tolyl group, the xylyl group, the methoxyphenyl group, the dimethoxyphenyl group, the biphenyl group, or the phenoxyphenyl group is more preferable, and the phenyl group is particularly preferable.

Specific preferred examples of the group represented by the general formula (1-2) include a naphthyl group; a $-C_{10}H_6-B(OMgCl)_2$ group, a $-C_{10}H_6-B(OMgBr)_2$ group; a fluoronaphthyl group, a difluoronaphthyl group, a trifluoronaphthyl group; a methylnaphthyl group, a dimethylnaphthyl group, a trimethylnaphthyl group, an ethylnaphthyl group, a diethylnaphthyl group, a triethylnaphthyl group; a methoxynaphthyl group, a dimethoxynaphthyl group, a trimethoxynaphthyl group, an ethoxynaphthyl group, a diethoxynaphthyl group, a triethoxynaphthyl group; a phenylnaphthyl group; and a phenoxynaphthyl group, and the naphthyl group is more preferable.

Specific preferred examples of the group represented by the general formula (1-3) include an anthracenyl group; a $-C_{14}H_8-B(OMgCl)_2$ group, a $-C_{14}H_8-B(OMgBr)_2$ group; a fluoroanthracenyl group, a difluoroanthracenyl group, a trifluoroanthracenyl group; methylanthracenyl group, a dimethylanthracenyl group, a trimethylanthracenyl group, an ethylanthracenyl group, a diethyl anthracenyl group, a triethylanthracenyl group; a methoxyanthracenyl group, a dimethoxyanthracenyl group, a trimethoxyanthracenyl group, an ethoxyanthracenyl group, a diethoxyanthracenyl group, a triethoxyanthracenyl group; phenylanthracenyl group; and a phenoxyanthracenyl group, and the anthracenyl group is more preferable.

Examples of the monocyclic heterocyclic group in $R^1$ of the general formula (I) include a 5- or 6-membered monocyclic heterocyclic group. Examples of the heteroatom contained in the monocyclic heterocyclic group include a nitrogen atom, an oxygen atom, and a sulfur atom, the oxygen atom or the sulfur atom is preferable, and the oxygen atom is more preferable. In addition, the number of heteroatoms contained in the monocyclic heterocyclic group is 1 or more, preferably 1 or 2, and more preferably 1. Specific examples of the monocyclic heterocyclic group include a 5-membered heterocyclic group having one heteroatom, such as furan, thiophene, pyrrole, 2H-pyrrole, 1-pyrroline, 2-pyrroline, 3-pyrroline, or pyrrolidine; a 5-membered heterocyclic group having two heteroatoms, such as oxazole, isoxazole, thiazole, isothiazole, imidazole, pyrazole, imidazoline, imidazolidine, 1-pyrazoline, 2-pyrazoline, 3-pyrazoline, and pyrazolidine; a 5-membered heterocyclic group having three heteroatoms, such as furazan, triazole, oxadiazole, and thiadiazole; a 5-membered heterocyclic group having four heteroatoms, such as tetrazole; a 6-membered heterocyclic group having one heteroatom, such as 2H-pyran, 4H-pyran, thiopyran, pyridine, and piperidine; a 6-membered heterocyclic group having two heteroatoms, such as pyridazine, pyrimidine, pyrazine, piperazine, and morpholine; and a 6-membered heterocyclic group having three heteroatoms, such as triazine. Among these, the 5- or 6-membered heterocyclic group having one or two heteroatoms is preferable, the 5- or 6-membered unsaturated heterocyclic group (having a double bond) having one or two heteroatoms is more preferable, furan, thiophene, pyrrole, oxazole, isoxazole, thiazole, isothiazole, imidazole, pyrazole, pyridine, pyridazine, pyrimidine, or pyrazine is still more preferable, furan, thiophene, pyrrole, or pyridine is even still more preferable, and furan is particularly preferable.

Examples of the bicyclic heterocyclic group in $R^1$ of the general formula (I) include a bicyclic heterocyclic group in which 5- or 6-membered monocyclic heterocycles are fused with each other, and a bicyclic heterocyclic group in which a 5- or 6-membered monocyclic heterocycle is fused with benzene. Examples of the heteroatom contained in the bicyclic heterocyclic group include a nitrogen atom, an oxygen atom, and a sulfur atom, the oxygen atom or the sulfur atom is preferable, and the oxygen atom is more preferable. In addition, the number of heteroatoms contained in the bicyclic heterocyclic group is 1 or more, preferably 1 or 2, and more preferably 1. Specific examples of the bicyclic heterocyclic group include a bicyclic heterocyclic group in which a 5-membered monocyclic ring having one heteroatom, such as benzofuran, isobenzofuran, 1-benzothiophene, 2-benzothiophene, indole, isoindole, indoline, isoindoline, and indolizine, is fused with benzene; a bicyclic heterocyclic group in which a 6-membered monocyclic ring having one heteroatom, such as 2H-chromene, 4H-chromene, 1H-isochromene, 3H-isochromene, chromane, isochromane, quinoline, isoquinoline, and 4H-quinolidine, is fused with benzene; a bicyclic heterocyclic group in which a 5-membered monocyclic ring having two heteroatoms, such as benzimidazole, benzothiazole, and 1H-indazole, is fused with benzene; and a bicyclic heterocyclic group in which a 6-membered monocyclic ring having two heteroatoms, such as cinnoline, quinazoline, quinoxaline, 1,8-naphthyridine, and phthalazine, is fused with benzene. Among these, the bicyclic heterocycle in which a 5-membered monocyclic heterocycle having one heteroatom is fused with benzene is preferable, benzofuran, isobenzofuran, 1-benzothiophene, 2-benzothiophene, indole, or isoindole is more preferable, and benzofuran is particularly preferable.

In a case where the bicyclic heterocyclic group contains a benzene ring, the substituent is preferably positioned on the benzene ring.

Specific examples of the "monocyclic or bicyclic heterocyclic group, which has a $-B(OMgCl)_2$ group, a -B(OM-

gBr)$_2$ group, a halogeno group, an alkyl group, an alkoxy group, a vinyl group, a phenyl group, or a phenoxy group as a substituent or is unsubstituted," in $R^1$ of the general formula (I) include groups represented by the following general formulae (1-4) to (1-7), the group represented by the general formula (1-4), (1-5), or (1-7) is preferable, the group represented by the general formula (1-4) or (1-5) is more preferable, and the group represented by the general formula (1-4) is particularly preferable.

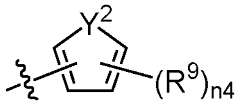

(I-4)

[in the general formula (1-4), $R^9$ represents a -B(OMgCl)$_2$ group, a -B(OMgBr)$_2$ group, a halogeno group, an alkyl group, an alkoxy group, a vinyl group, a phenyl group or a phenoxy group, $Y^2$ represents an oxygen atom, a sulfur atom, or a -NR$^{10}$- group ($R^{10}$ represents a hydrogen atom or an alkyl group having 1 to 6 carbon atoms), and $n_4$ represents an integer of 0 to 3].

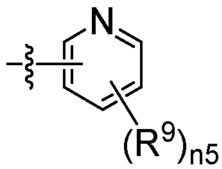

(I-5)

[in the general formula (1-5), $n_5$ represents an integer of 0 to 4, and $R^9$ is the same as above].

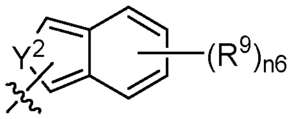

(I-6)

[in the general formula (1-6), $n_6$ represents an integer of 0 to 5, and $R^9$ and $Y^2$ are each the same as above].

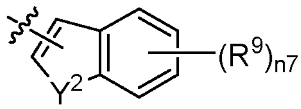

(I-7)

[in the general formula (1-6), $n_7$ represents an integer of 0 to 5, and $R^9$ and $Y^2$ are each the same as above].

Examples of the halogeno group, the alkyl group, the alkoxy group, the vinyl group, the phenyl group, and the phenoxy group in $R^9$ of the general formulae (1-4) to (1-7) each include the same ones as those as a substituent of the aryl group having 6 to 18 carbon atoms in $R^1$ of the general formula (I), and preferred ones thereof are also the same.

Preferred examples of $R^9$ in the general formulae (1-4) to (1-7) include the same ones as the preferred groups of $R^8$ in the general formulae (1-1) to (1-3).

In $Y^2$ of the general formulae (1-4) to (1-7), examples of the alkyl group having 1 to 6 carbon atoms in $R^{10}$ of the -NR$^{10}$- group include the same groups ones as the alkyl group having 1 to 6 carbon atoms in $R^1$ of the general formula (I), and preferred ones thereof are also the same.

In $Y^2$ of the general formulae (1-4) to (1-7), as $R^{10}$ of the -NR$^{10}$- group, a hydrogen atom, a methyl group, or an ethyl group is preferable, the hydrogen atom or the methyl group is more preferable, and the hydrogen atom is particularly preferable.

That is, as the -NR$^{10}$- group in $Y^2$ of the general formulae (1-4) to (1-7), an -NH-group, an -NCH$_3$ group, or an -NC$_2$H$_5$- group is preferable, the -NH- group or the -NCH$_3$-group is more preferable, and the -NH- group is particularly preferable.

As $Y^2$ of the general formulae (1-4) to (1-7), an oxygen atom or a sulfur atom is preferable, and the oxygen atom is more preferable.

$n_4$ of the general formula (1-4) is preferably an integer of 0 to 2, and more preferably 0.

$n_5$ of the general formula (1-5) is preferably an integer of 0 to 2, and more preferably 0.

$n_6$ in the general formula (1-6) is preferably an integer of 0 to 2, and more preferably 0.

$n_7$ of the general formula (1-7) is preferably an integer of 0 to 2, and more preferably 0.

Specific preferred examples of the groups represented by the general formulae (1-4) to (1-7) include groups represented by the following general formulae (1-4') to (1-7'), the group represented by the general formula (1-4'), (1-5'), or (1-7') is preferable, the group represented by the general formula (1-4') or (1-5') is more preferable, and the group represented by the general formula (1-4') is particularly preferable.

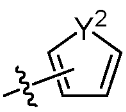
(I-4')
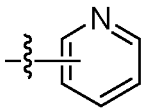
(I-5')
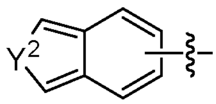
(I-6')
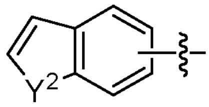
(I-7')

[in the general formulae (1-4') to (1-7'), $Y^2$ is the same as above].

Specific examples of the group represented by the general formula (1-4') include the following groups.

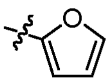 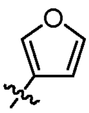 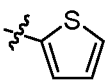 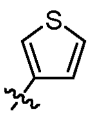 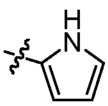 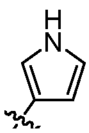

Specific examples of the group represented by the general formula (1-5') include the following groups.

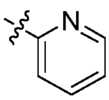 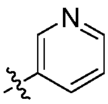 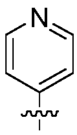

Specific examples of the group represented by the general formula (1-6') include the following groups.

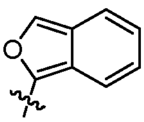 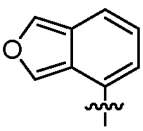 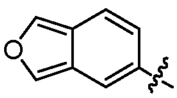 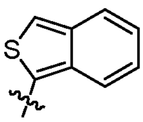 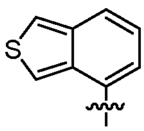 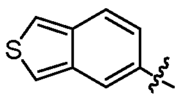

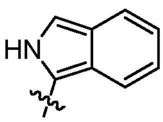 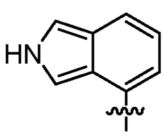 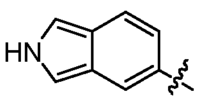

Among the specific examples, the following groups are preferable.

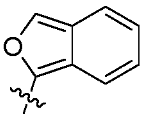 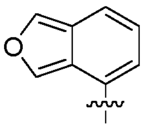 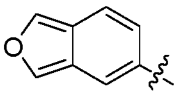

Specific examples of the group represented by the general formula (1-7') include the following groups.

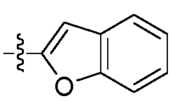 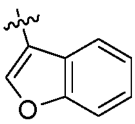 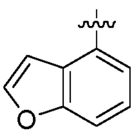 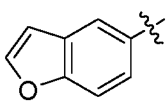 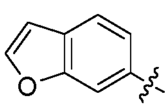 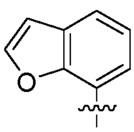

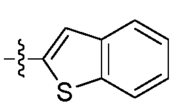 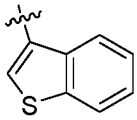 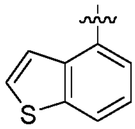 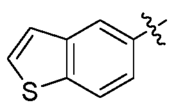 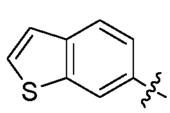 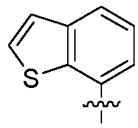

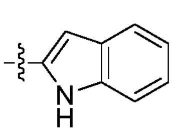 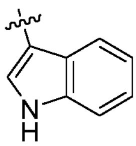 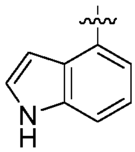 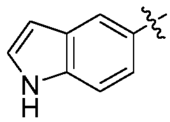 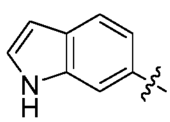 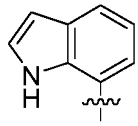

Among the specific examples, the following groups are preferable.

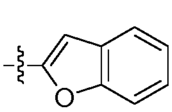 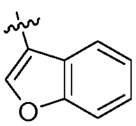 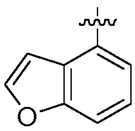 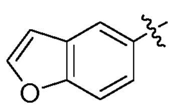 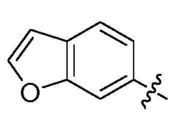 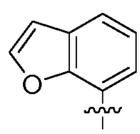

As $R^1$ of the general formula (I), an -OMgCl group, an -OMgBr group, an alkyl group having 1 to 6 carbon atoms, an alkoxy group having 1 to 6 carbon atoms, a phenoxy group, the groups represented by the general formulae (1-1) to (1-3), or the groups represented by the general formulae (1-4) to (1-7) are preferable; and the -OMgCl group, the -OMgBr group, a linear alkyl group having 1 to 4 carbon atoms, a linear alkoxy group having 1 to 4 carbon atoms, the phenoxy group, the groups represented by the general formulae (1-1) to (1-3), or the groups represented by the general formulae (1-4') to (1-7') are more preferable. Specific examples thereof include an -OMgCl group, an -OMgBr group; a methyl group, an ethyl group, an n-propyl group, an n-butyl group; methoxy group, an ethoxy group, an n-propoxy group, an n-butoxy group; a phenoxy group; a phenyl group, a $-C_6H_4-B(OMgCl)_2$ group, a $-C_6H_4-B(OMgBr)_2$ group, a fluorophenyl group, a difluorophenyl group, a trifluorophenyl group; a tolyl group, a xylyl group, a mesityl group, an ethylphenyl group, a diethylphenyl group, a triethylphenyl group, a methoxyphenyl group, a dimethoxyphenyl group, a trimethoxyphenyl group, an ethoxyphenyl group, a diethoxyphenyl group, a triethoxyphenyl group, a biphenyl group, a phenoxyphenyl group; a naphthyl group; an anthracenyl group; and the following groups.

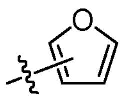 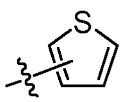 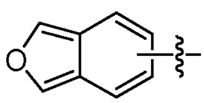 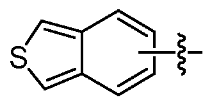 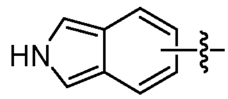

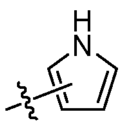 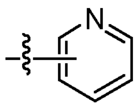 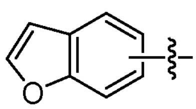 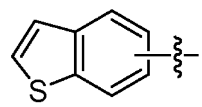 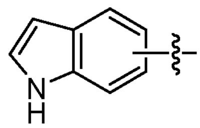

Among the specific examples, the -OMgCl group, the methyl group, the ethyl group, the methoxy group, the ethoxy group, the phenoxy group, the phenyl group, the $-C_6H_4-B(OMgCl)_2$ group, the fluorophenyl group, the difluorophenyl group, the tolyl group, the xylyl group, the methoxyphenyl group, the dimethoxyphenyl group, the biphenyl group, the phenoxyphenyl group, the naphthyl group, the anthracenyl group, or the following groups are preferable; the -OMgCl group or the phenyl group is more preferable; and the -OMgCl group is particularly preferable.

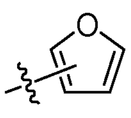 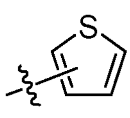 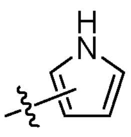 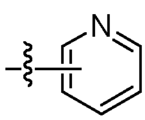 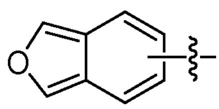 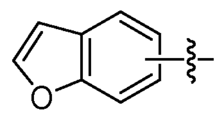

Specific preferred examples of the compound represented by the general formula (I) include a compound represented by the following general formula (I').

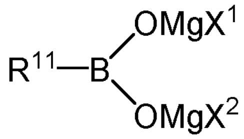

(I')

[in the general formula (I'), $R^{11}$ represents an -OMgCl group, an -OMgBr group, a linear alkyl group having 1 to 4 carbon atoms, a linear alkoxy group having 1 to 4 carbon atoms, a phenoxy group, a group represented by the general formulae (1-1) to (1-3), or a group represented by each of the general formulae (1-4') to (1-7'), and $X^1$ and $X^2$ are each the same as described above].

As the linear alkyl group having 1 to 4 carbon atoms in $R^{11}$ of the general formula (I'), a methyl group or an ethyl group is preferable, and the methyl group is more preferable.

As the linear alkoxy group having 1 to 4 carbon atoms in $R^{11}$ of the general formula (I'), a methoxy group or an ethoxy group is preferable, and the methoxy group is more preferable.

As $R^{11}$ of the general formula (I'), the -OMgCl group, a methyl group, an ethyl group, a methoxy group, an ethoxy group, a phenoxy group, a phenyl group, a $-C_6H_4-B(OMgCl)_2$ group, a fluorophenyl group, a difluorophenyl group, a tolyl group, a xylyl group, a methoxyphenyl group, a dimethoxyphenyl group, a biphenyl group, a phenoxyphenyl group, a naphthyl group, an anthracenyl group, or the following groups are preferable; the -OMgCl group or the phenyl group is more preferable; and the -OMgCl group is particularly preferable.

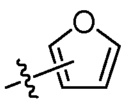 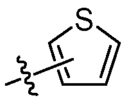 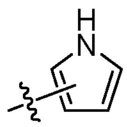 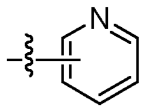 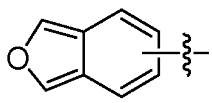 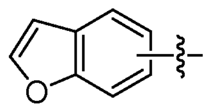

Specific examples of the compound represented by the general formula (I') include the following compounds, and among these, $-B(OMgCl)_3$ or $-C_6H_5B(OMgCl)_2$ is preferable, and $-B(OMgCl)_3$ is more preferable.

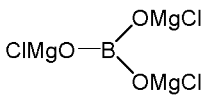 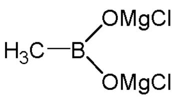 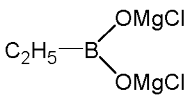 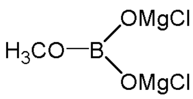 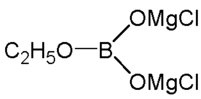 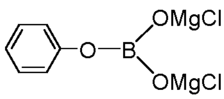

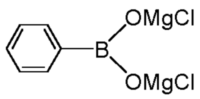 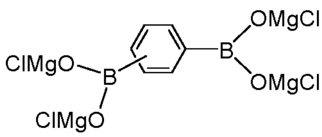 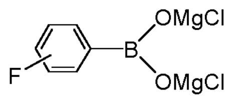 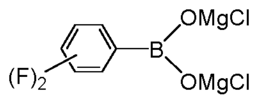

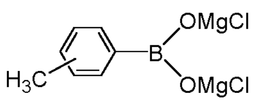 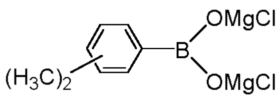 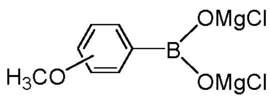 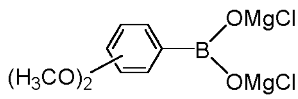

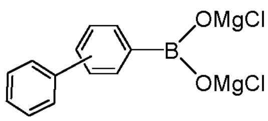 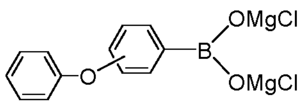 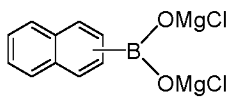 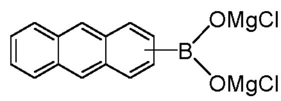

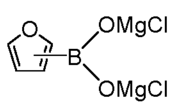 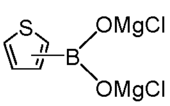 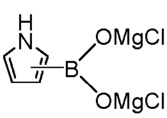 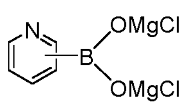 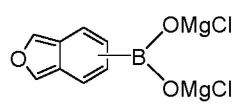 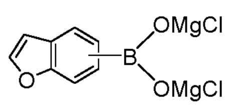

In addition to the specific examples, the specific examples of the compounds and the preferred compounds described in International Publication WO2016/084924 can be appropriately used as the compound represented by the general formula (I).

**Electrolytic Solution According to Present Invention: Compound Represented by General Formula (II)**

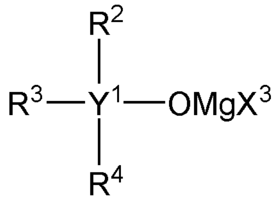

(II)

[in the general formula (II), $Y^1$, $X^3$, and $R^2$ to $R^4$ are each the same as above].

$Y^1$ of the general formula (II) is a carbon atom or a silicon atom, and the silicon atom is preferable.

$X^3$ of the general formula (II) is a chlorine atom or a bromine atom, and the chlorine atom is preferable.

Examples of the alkyl group having 1 to 6 carbon atoms in $R^3$ and $R^4$ of the general formula (II) include the same ones as those of the alkyl group having 1 to 6 carbon atoms in $R^1$ of the general formula (I), and preferred ones thereof are also the same.

Examples of the halogeno group as the substituent of the alkyl group having 1 to 6 carbon atoms in $R^3$ and $R^4$ of the general formula (II) include a fluoro group, a chloro group, a bromo group, and an iodo group, and the fluoro group is preferable.

The alkyl group having 1 to 6 carbon atoms, which has a halogeno group as a substituent, in $R^3$ and $R^4$ of the general formula (II) is an alkyl group in which 1 to 13 hydrogen atoms are substituted with halogeno groups, preferably an alkyl group in which 1 to 3 hydrogen atoms or all the hydrogen atoms are substituted with halogeno groups, more preferably an alkyl group in which one hydrogen atom or all the hydrogen atom are substituted with halogeno groups, and particularly preferably the alkyl group in which all the hydrogen atom are substituted with halogeno groups (perhaloalkyl group). The halogeno group may be bonded to any of the carbon atoms constituting the alkyl group, and those bonded to the carbon atom at a terminal of the alkyl group are preferable.

Specific examples of the alkyl group having 1 to 6 carbon atoms, which has a halogeno group as a substituent, in $R^3$ and $R^4$ of the general formula (II) include a trifluoromethyl group, a pentafluoroethyl group, a heptafluoro-n-propyl group, a heptafluoroisopropyl group, a perfluoro-n-butyl group, a perfluoroisobutyl group, a perfluoro-sec-butyl group, a perfluoro-tert-butyl group, a fluoromethyl group, a fluoroethyl group, a fluoro-n-propyl group, a fluoroisopropyl group, a fluoro-n-butyl group, a fluoroisobutyl group, a fluoro-sec-butyl group, and a fluoro-tert-butyl group. Among these, the trifluoromethyl group, the pentafluoroethyl group, the heptafluoro-n-propyl group, the heptafluoroisopropyl group, the perfluoro-n-butyl group, the perfluoroisobutyl group, the perfluoro-sec-butyl group, or the perfluoro-tert-butyl group is preferable, the trifluoromethyl group, the pentafluoroethyl group, the heptafluoro-n-propyl group, or the perfluoro-n-butyl group is more preferable, and the trifluoromethyl group is particularly preferable.

The alkoxy group as a substituent of the alkyl group having 1 to 6 carbon atoms in $R^3$ and $R^4$ of the general formula (II) usually has 1 to 6 carbon atoms, preferably has 1 to 4 carbon atoms, and more preferably has 1 or 2 carbon atoms. In addition, the alkoxy group may be in any of linear, branched, and cyclic forms, and is preferably linear and branched, and more preferably linear. Specific examples of the alkoxy group include the same ones as the specific examples of the alkoxy group having 1 to 6 carbon atoms in $R^1$ of the general formula (I), and preferred ones thereof are also the same.

The alkyl group having 1 to 6 carbon atoms, which has an alkoxy group as a substituent, in $R^3$ and $R^4$ of the general formula (II) usually has 1 to 3 substituents, and preferably one substituent. The alkoxy group may be bonded to any of the carbon atoms constituting the alkyl group, and is preferably bonded to the carbon atom at a terminal of the alkyl group.

Specific examples of the alkyl group having 1 to 6 carbon atoms, which has an alkoxy group as a substituent, in $R^3$ and $R^4$ of the general formula (II) include a methoxymethyl group, an ethoxymethyl group, an n-propoxymethyl group, an isopropoxymethyl group, an n-butoxymethyl group, an isobutoxymethyl group, a sec-butoxymethyl group, a tert-butoxymethyl group, a methoxyethyl group, an ethoxyethyl group, an n-propoxyethyl group, an isopropoxyethyl group, an n-butoxyethyl group, an isobutoxyethyl group, a sec-butoxyethyl group, a tert-butoxyethyl group, a methoxy-n-propyl group, an ethoxy-n-propyl group, an n-propoxy-n-propyl group, an isopropoxy-n-propyl group, an n-butoxy-n-propyl group, an isobutoxy-n-propyl group, a sec-butoxy-n-propyl group, a tert-butoxy-n-propyl group, a methoxy-n-butyl group, an ethoxy-n-butyl group, an n-propoxy-n-butyl group, an isopropoxy-n-butyl group, an n-butoxy-n-butyl group, an isobutoxy-n-butyl group, a sec-butoxy-n-butyl group, and a tert-butoxy-n-butyl group. Among these, the methoxymethyl group, the ethoxymethyl group, the methoxyethyl group, the ethoxyethyl group, the methoxy-n-propyl group, the ethoxy-n-propyl group, the methoxy-n-butyl group, or the ethoxy-n-butyl group is preferable, and the methoxymethyl group, the

ethoxymethyl group, the methoxyethyl group, or the ethoxyethyl group is more preferable.

As the "alkyl group having 1 to 6 carbon atoms, which has a halogeno group or an alkoxy group as a substituent or is unsubstituted," in $R^3$ and $R^4$ of the general formula (II), an alkyl group having 1 to 6 carbon atoms, which has a halogeno group or an alkoxy group having 1 to 6 carbon atoms as a substituent or is unsubstituted, is preferable, an alkyl group having 1 to 6 carbon atoms, which has a fluoro group or a linear alkoxy group having 1 to 4 carbon atoms as a substituent or is unsubstituted, is more preferable, the unsubstituted alkyl group having 1 to 6 carbon atoms is still more preferable; and an unsubstituted alkyl group having 1 to 4 carbon atoms is particularly preferable.

Specific examples of the alkyl group having 1 to 6 carbon atoms, which has a halogeno group or an alkoxy group as a substituent or is unsubstituted, in $R^3$ and $R^4$ of the general formula (II) include a methyl group, an ethyl group, an n-propyl group, an isopropyl group, an n-butyl group, an isobutyl group, a sec-butyl group, a tert-butyl group; a trifluoromethyl group, a pentafluoroethyl group, a heptafluoro-n-propyl group, a heptafluoroisopropyl group, a perfluoro-n-butyl group, a perfluoroisobutyl group, a perfluoro-sec-butyl group, a perfluoro-tert-butyl group; a methoxymethyl group, an ethoxymethyl group, a methoxyethyl group, an ethoxyethyl group, a methoxy-n-propyl group, an ethoxy-n-propyl group, a methoxy-n-butyl group, and an ethoxy-n-butyl group. Among these, the methyl group, the ethyl group, the n-propyl group, the isopropyl group, the n-butyl group, the isobutyl group, the sec-butyl group, or the tert-butyl group is preferable, the methyl group, the ethyl group, the n-propyl group, or the n-butyl group is more preferable, the methyl group or the ethyl group is still more preferable, and the methyl group is particularly preferable.

The alkenyl group having 2 to 6 carbon atoms as $R^3$ and $R^4$ of the general formula (II) may be in any of linear, branched, and cyclic forms, and is preferably linear and branched, and more preferably linear. In addition, among the alkenyl groups having 2 to 6 carbon atoms, those having 2 or 3 carbon atoms are preferable. Specific examples of the alkenyl group include a vinyl group, an allyl group, a 1-propenyl group, an isopropenyl group, a 3-butenyl group, a 2-butenyl group, a 1-butenyl group, a 1,3-butadienyl group, a 4-pentenyl group, a 3-pentenyl group, a 2-pentenyl group, a 1-pentenyl group, a 1-methyl-1-butenyl group, a 5-hexenyl group, a 4-hexenyl group, a 3-hexenyl group, a 2-hexenyl group, and a 1-hexenyl group, the vinyl group, the allyl group, the 1-propenyl group, or the isopropenyl group is preferable, and the allyl group is more preferable.

Examples of the aryl group having 6 to 10 carbon atoms in $R^2$ to $R^4$ of the general formula (II) include a phenyl group and a naphthyl group, and the phenyl group is preferable.

Examples of the halogeno group as a substituent of the aryl group having 6 to 10 carbon atoms in $R^2$ to $R^4$ of the general formula (II) include a fluoro group, a chloro group, a bromo group, and an iodo group, and the fluoro group is preferable.

The alkyl group as a substituent of the aryl group having 6 to 10 carbon atoms in $R^2$ to $R^4$ of the general formula (II) usually has 1 to 6 carbon atoms, preferably has 1 to 4 carbon atoms, and more preferably has 1 or 2 carbon atoms. In addition, the alkoxy group may be in any of linear, branched, and cyclic forms, and is preferably linear and branched, and more preferably linear. Specific examples of the alkyl group include the same ones as the specific examples of the alkyl group having 1 to 6 carbon atoms in $R^1$ of the general formula (I), and preferred ones thereof are also the same.

The haloalkyl group as a substituent of the aryl group having 6 to 10 carbon atoms in $R^2$ to $R^4$ of the general formula (II) usually has 1 to 6 carbon atoms, preferably has 1 to 4 carbon atoms, and more preferably has 1 or 2 carbon atoms. In addition, the haloalkyl group may be in any of linear, branched, and cyclic forms, and is preferably linear and branched, and more preferably linear. Specific examples of the haloalkyl group include fluoroalkyl groups, chloroalkyl groups, bromoalkyl groups, and iodoalkyl groups, the fluoroalkyl groups are preferable, and among these, a perfluoroalkyl group or a monofluoroalkyl group is more preferable, and the perfluoroalkyl group is particularly preferable. More specific examples of the haloalkyl group include the same ones as the specific examples of the alkyl group having 1 to 6 carbon atoms, which has a halogeno group as a substituent, in $R^3$ and $R^4$ of the general formula (II), and preferred ones thereof are also the same.

The alkoxy group as a substituent of the aryl group having 6 to 10 carbon atoms in $R^2$ to $R^4$ of the general formula (II) usually has 1 to 6 carbon atoms, preferably has 1 to 4 carbon atoms, and more preferably has 1 or 2 carbon atoms. In addition, the haloalkyl group may be in any of linear, branched, and cyclic forms, and is preferably linear and branched, and more preferably linear. Specific examples of the alkoxy group include the same ones as the specific examples of the alkoxy group having 1 to 6 carbon atoms in $R^1$ of the general formula (I), and preferred ones thereof are also the same.

The "aryl group having 6 to 10 carbon atoms, which has a halogeno group, an alkyl group, a haloalkyl group, or an alkoxy group as a substituent", in $R^2$ to $R^4$ of the general formula (II) usually has 1 to 7 substituents, preferably has 1 to 5 substituents, more preferably has 1 or 2 substituents, and particularly preferably one substituent.

The aryl group may have a substituent at any position. For example, in a case where the aryl group is a phenyl group, the phenyl group may have a substituent at any of the ortho position, the meta position, and the para position; in a case where the phenyl group has one substituent, it is preferable that the phenyl group has the substituent at the para position; and in a case where the phenyl group has two substituents, it is preferable that the phenyl group has the substituents at the meta positions.

As the "aryl group having 6 to 10 carbon atoms, which has a halogeno group, an alkyl group, a haloalkyl group, or an alkoxy group as a substituent or is unsubstituted," in $R^2$ to $R^4$ of the general formula (II), a phenyl group which has a halogeno group, an alkyl group having 1 to 6 carbon atoms, a haloalkyl group having 1 to 6 carbon atoms, or an alkoxy group having 1 to 6 carbon atoms as a substituent or is unsubstituted is preferable; a phenyl group which has a fluoro group, an alkyl group having 1 to 4 carbon atoms, a perfluoroalkyl group having 1 to 4 carbon atoms, or an alkoxy group having 1 to 4 carbon atoms as a substituent or is unsubstituted is more preferable; a phenyl group which has a fluoro group, a linear alkyl group having 1 to 4 carbon atoms, or a linear alkoxy group having 1 to 4 carbon atoms as a substituent or is unsubstituted is still more preferable; and the unsubstituted phenyl group is particularly preferable.

Specific examples of the "aryl group having 6 to 10 carbon atoms, which has a halogeno group, an alkyl group, a haloalkyl group, or an alkoxy group as a substituent or is unsubstituted," in $R^2$ to $R^4$ of the general formula (II) include a group represented by the following general formula (II-1).

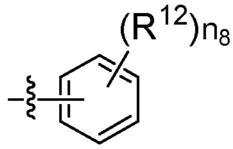

(II-1)

[in the general formula (II-1), $R^{12}$ represents a halogeno group, an alkyl group having 1 to 6 carbon atoms, a haloalkyl group having 1 to 6 carbon atoms, or an alkoxy group having 1 to 6 carbon atoms, and $n_8$ represents an integer of 0 to 5].

Examples of the halogeno group, the alkyl group, the haloalkyl group, and the alkoxy group in $R^{12}$ of the general formula (II-1) include the same ones as those as the substituent of the aryl group having 6 to 10 carbon atoms in $R^2$ to $R^4$ of the general formula (II), and preferred ones thereof are also the same.

As $R^{12}$ of the general formula (II-1), a fluoro group, an alkyl group having 1 to 4 carbon atoms, a perfluoroalkyl group having 1 to 4 carbon atoms, or an alkoxy group having 1 to 4 carbon atoms is preferable; the fluoro group, a linear alkyl group having 1 to 4 carbon atoms, or a linear alkoxy group having 1 to 4 carbon atoms is more preferable; and the fluoro group, a methyl group, an ethylphenyl group, a methoxy group, or an ethoxy group is still more preferable.

$n_8$ of the general formula (II-1) is preferably an integer of 0 to 3, more preferably an integer of 0 to 2, and particularly preferably 0.

Specific preferred examples of the group represented by the general formula (II-1) include a phenyl group; a fluorophenyl group, a difluorophenyl group; a tolyl group, an ethylphenyl group, an n-propylphenyl group, an n-butylphenyl group, a xylyl group, diethylphenyl group, a di-n-propylphenyl group, a di-n-butylphenyl group, a mesityl group; a methoxyphenyl group, an ethoxyphenyl group, an n-propoxyphenyl group, an n-butoxyphenyl group, a dimethoxyphenyl group, a diethoxyphenyl group, a di-n-propoxyphenyl group, and a di-n-butoxyphenyl group, the phenyl group, the fluorophenyl group, the difluorophenyl group, the tolyl group, the ethylphenyl group, the xylyl group, the diethylphenyl group, the methoxyphenyl group, the ethoxyphenyl group, the dimethoxyphenyl group, or the diethoxyphenyl group is more preferable, and the phenyl group is particularly preferable.

As $R^3$ and $R^4$ of the general formula (II), an -OMgCl group; an -OMgBr group; an unsubstituted alkyl group having 1 to 6 carbon atoms; an alkenyl group having 2 to 6 carbon atoms; or a phenyl group which has a halogeno group, an alkyl group having 1 to 6 carbon atoms, a haloalkyl group having 1 to 6 carbon atoms, or an alkoxy group having 1 to 6 carbon atoms as a substituent or is unsubstituted is preferable, and the -OMgCl group; the -OMgBr group; an unsubstituted alkyl group having 1 to 4 carbon atoms; an alkenyl group having 2 or 3 carbon atoms; a phenyl group which has a fluoro group, an alkyl group having 1 to 4 carbon atoms, a perfluoroalkyl group having 1 to 4 carbon atoms, or an alkoxy group having 1 to 4 carbon atoms as a substituent or is unsubstituted is more preferable. Specific examples thereof include an -OMgCl group, an -OMgBr group, a methyl group, an ethyl group, an n-propyl group, an n-butyl group, a vinyl group, an allyl group, a 1-propenyl group, an isopropenyl group, a phenyl group, a fluorophenyl group, a difluorophenyl group, a tolyl group, an ethylphenyl group, an n-propylphenyl group, an n-butylphenyl group, a xylyl group, a diethylphenyl group, a di-n-propylphenyl group, a di-n-butylphenyl group, a mesityl group, a methoxyphenyl group, an ethoxyphenyl group, an n-propoxyphenyl group, an n-butoxyphenyl group, a dimethoxyphenyl group, a diethoxyphenyl group, a di-n-propoxyphenyl group, and a di-n-butoxyphenyl group. Among these, the -OMgCl group, the methyl group, the ethyl group, the allyl group, the phenyl group, the fluorophenyl group, the difluorophenyl group, the tolyl group, the ethylphenyl group, the xylyl group, the diethylphenyl group, the methoxyphenyl group, the ethoxyphenyl group, the dimethoxyphenyl group, or the diethoxyphenyl group is preferable, and the -OMgCl group, the methyl group, the allyl group, the phenyl group, the fluorophenyl group, the tolyl group, the xylyl group, the methoxyphenyl group, or the dimethoxyphenyl group is more preferable.

Specific preferred examples of the compound represented by the general formula (II) include a compound represented by the following general formula (II').

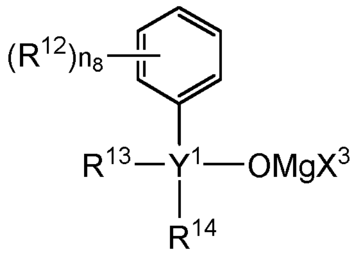

(II')

[in the general formula (II'), $R^{13}$ and $R^{14}$ each independently represent an -OMgCl group, an -OMgBr group, an unsubstituted alkyl group having 1 to 4 carbon atoms, an alkenyl group having 2 or 3 carbon atoms, or the group represented by the general formula (II-1), and $Y^1$, $X^3$, $R^{12}$, and $n_8$ are each the same as above].

Examples of the unsubstituted alkyl groups having 1 to 4 carbon atoms in $R^{13}$ and $R^{14}$ of the general formula (II') include a methyl group, an ethyl group, an n-propyl group, an isopropyl group, an n-butyl group, an isobutyl group, a sec-butyl group, and a tert-butyl group, the methyl group, the ethyl group, the n-propyl group, or the n-butyl group is preferable, the methyl group or the ethyl group is more preferable, and the methyl group is particularly preferable.

Examples of the alkenyl group having 2 or 3 carbon atoms in $R^{13}$ and $R^{14}$ of the general formula (II') include a vinyl group, an allyl group, a 1-propenyl group, and an isopropenyl group, and the allyl group is preferable.

As $R^{13}$ and $R^{14}$ of the general formula (II'), the -OMgCl group, a methyl group, an ethyl group, an allyl group, a phenyl group, a fluorophenyl group, a difluorophenyl group, a tolyl group, an ethylphenyl group, a xylyl group, a diethylphenyl group, a methoxyphenyl group, an ethoxyphenyl group, a dimethoxyphenyl group, or a diethoxyphenyl group is preferable, and the -OMgCl group, the methyl group, the allyl group, the phenyl group, the fluorophenyl group, the tolyl group, the xylyl group, the methoxyphenyl group, or the dimethoxyphenyl group is more preferable.

Specific examples of the compound represented by the general formula (II') include the following compounds.

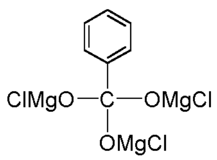
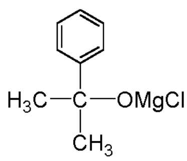
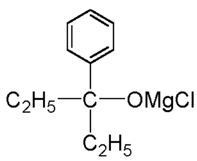
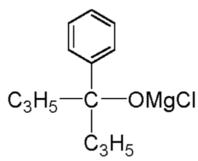

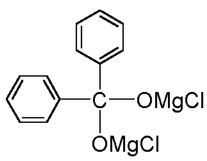
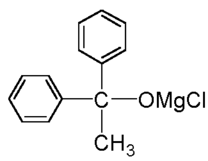
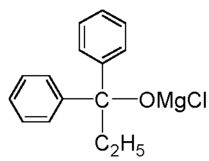
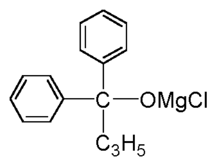

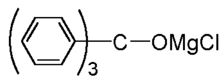
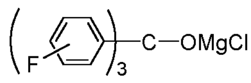
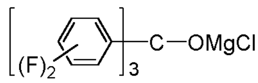

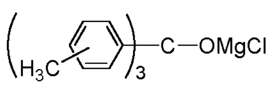
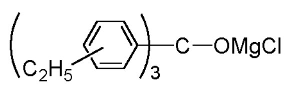
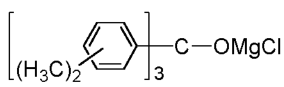
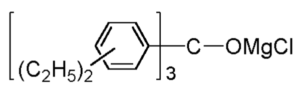

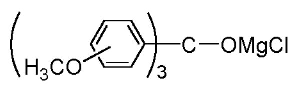
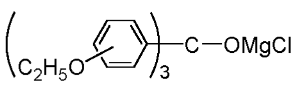
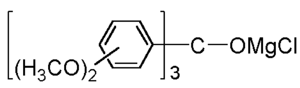
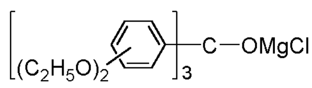

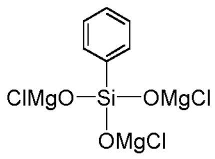
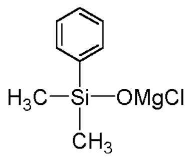
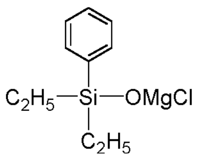
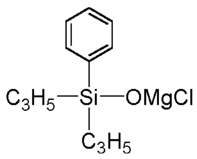

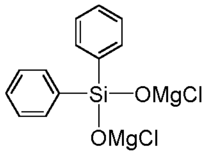 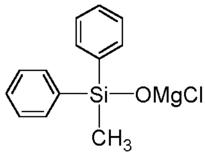 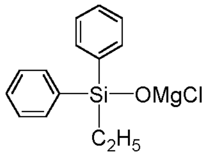 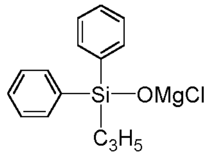

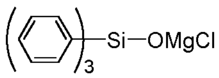 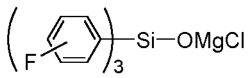 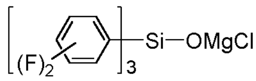

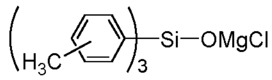 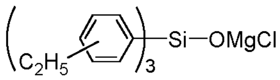 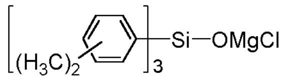 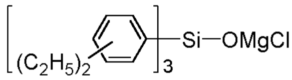

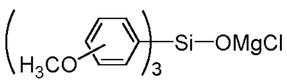 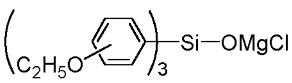 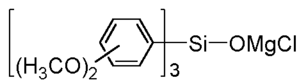 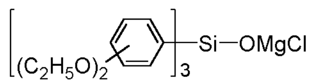

Among the specific examples, the following compounds are preferable.

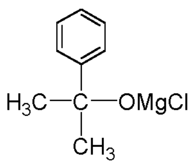 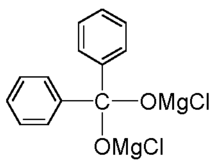 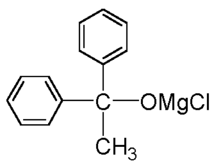 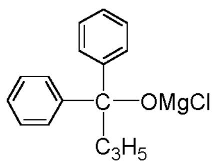

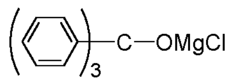 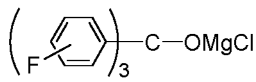

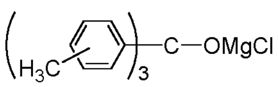 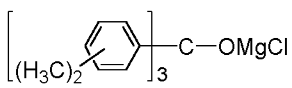 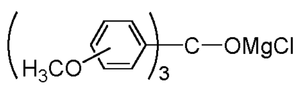 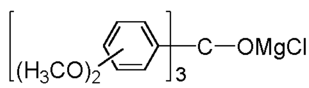

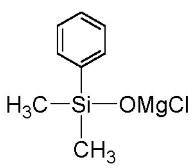 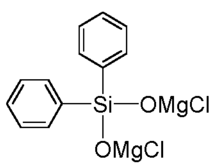 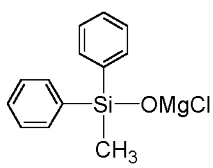 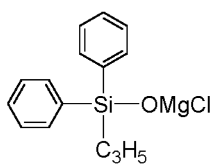

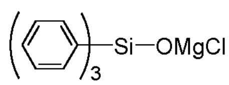 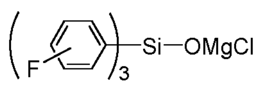

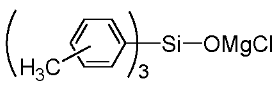 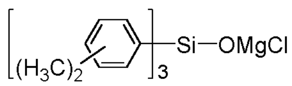 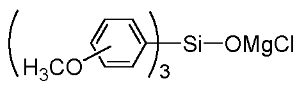 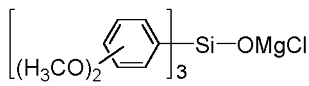

In addition to the specific examples, the specific examples of the compounds and the preferred compounds described in International Publication WO2017/170976 can be appropriately used as the compound represented by the general formula (II).

**Electrolytic Solution According to Present Invention: Compound Represented by General Formula (III)**

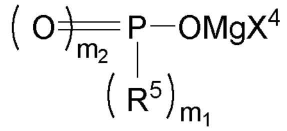

(III)

[in the general formula (III), $m_1$, $m_2$, $X^4$, and $R^5$ are each the same as above].

$m_1$ of the general formula (III) is 0 or 2, and preferably 2.

In a case of $m_1 = 0$, $m_2$ in the general formula (III) is 2, and in a case of $m_1 = 2$, $m_2$ is 0 or 1, and preferably 1.

$X^4$ of the general formula (III) is a chlorine atom or a bromine atom, and the chlorine atom is preferable.

Examples of the "alkyl group having 1 to 6 carbon atoms, which has a halogeno group or an alkoxy group as a substituent or is unsubstituted," in $R^5$ of the general formula (III) include the same ones as those of the "alkyl group having 1 to 6 carbon atoms, which has a halogeno group or an alkoxy group as a substituent or is unsubstituted," in $R^3$ and $R^4$ of the general formula (II), and preferred ones thereof are also the same.

Examples of the alkoxy group having 1 to 6 carbon atoms in $R^5$ of the general formula (III) include the same ones as those of the alkoxy group having 1 to 6 carbon atoms in $R^1$ of the general formula (I), and preferred ones thereof are also the same.

Examples of the "aryl group having 6 to 10 carbon atoms, which has a halogeno group, an alkyl group, a haloalkyl group, or an alkoxy group as a substituent or is unsubstituted," in $R^5$ of the general formula (III) include the same ones as those of the "aryl group having 6 to 10 carbon atoms, which has a halogeno group, an alkyl group, a haloalkyl group, or an alkoxy group as a substituent or is unsubstituted," in $R^2$ to $R^4$ of the general formula (II), and preferred ones thereof are also the same.

Examples of the aryloxy group having 6 to 10 carbon atoms in $R^5$ of the general formula (III) include a phenoxy group and a naphthyloxy group, and the phenoxy group is preferable.

Examples of the halogeno group, the alkyl group, the haloalkyl group, and the alkoxy group as a substituent of the aryloxy group having 6 to 10 carbon atoms in $R^5$ of the general formula (III) include the same ones as those as the substituent of the aryl group having 6 to 10 carbon atoms in $R^2$ to $R^4$ in the general formula (II), and preferred ones thereof are also the same.

The "aryloxy group having 6 to 10 carbon atoms, which has a halogeno group, an alkyl group, a haloalkyl group, or an alkoxy group as a substituent", in $R^5$ of the general formula (III) usually has 1 to 7 substituents, preferably has 1 to 5 substituents, more preferably has 1 or 2 substituents, and particularly preferably has one substituent.

The aryloxy group may have a substituent at any position. For example, in a case where the aryloxy group is a phenoxy group, the phenoxy group may have a substituent at any of the ortho position, the meta position, and the para position; in a case where the phenoxy group has one substituent, it is preferable that the phenoxy group has the substituent at the para position; and in a case where the phenoxy group has two substituents, it is preferable that the phenoxy group has the substituents at the meta positions.

As the "aryloxy group having 6 to 10 carbon atoms, which has a halogeno group, an alkyl group, a haloalkyl group, or an alkoxy group as a substituent" in $R^5$ of the general formula (III), a phenoxy group which has a halogeno group, an alkyl group having 1 to 6 carbon atoms, a haloalkyl group having 1 to 6 carbon atoms, or an alkoxy group having 1 to 6 carbon atoms as a substituent or is unsubstituted is preferable; a phenoxy group which has a fluoro group, an alkyl group having 1 to 4 carbon atoms, a perfluoroalkyl group having 1 to 4 carbon atoms, or an alkoxy group having 1 to 4 carbon atoms as a substituent or is unsubstituted is more preferable; a phenoxy group which has a fluoro group, a linear alkyl group having 1 to 4 carbon atoms, or a linear alkoxy group having 1 to 4 carbon atoms as a substituent or is unsubstituted is more preferable; and the unsubstituted phenoxy group is particularly preferable.

Specific examples of the "aryloxy group having 6 to 10 carbon atoms, which has a halogeno group, an alkyl group, a haloalkyl group, or an alkoxy group as a substituent," in $R^5$ of the general formula (III) include a group represented by the following general formula (III-3).

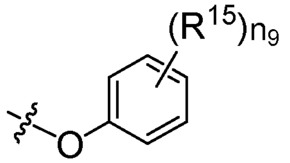

(III-3)

[in the general formula (III-3), $R^{15}$ represents a halogeno group, an alkyl group having 1 to 6 carbon atoms, a haloalkyl group having 1 to 6 carbon atoms, or an alkoxy group having 1 to 6 carbon atoms, and $n_9$ represents an integer of 0 to 5].

Examples of the halogeno group, the alkyl group, the haloalkyl group, and the alkoxy group in $R^{15}$ of the general

formula (III-3) include the same ones as those of the substituent of the aryl group having 6 to 10 carbon atoms in $R^2$ to $R^4$ of the general formula (II), and preferred ones thereof are also the same.

As $R^{15}$ of the general formula (III-3), a fluoro group, an alkyl group having 1 to 4 carbon atoms, a perfluoroalkyl group having 1 to 4 carbon atoms, or an alkoxy group having 1 to 4 carbon atoms is preferable; the fluoro group, a linear alkyl group having 1 to 4 carbon atoms, or a linear alkoxy group having 1 to 4 carbon atoms is more preferable; and the fluoro group, a methyl group, an ethylphenyl group, a methoxy group, or an ethoxy group is still more preferable.

$n_9$ of the general formula (III-3) is preferably an integer of 0 to 3, more preferably an integer of 0 to 2 and particularly preferably 0.

Specific preferred examples of the group represented by the general formula (III-3) include a phenoxy group; a fluorophenoxy group, a difluorophenoxy group; a methylphenoxy group, an ethylphenoxy group, an n-propylphenoxy group, an n-butylphenoxy group, a dimethylphenoxy group, a diethylphenoxy group, a di-n-propylphenoxy group, a di-n-butylphenoxy group, a methoxyphenoxy group, an ethoxyphenoxy group, an n-propoxyphenoxy group, an n-butoxyphenoxy group, a dimethoxyphenoxy group, a diethoxyphenoxy group, a di-n-propoxyphenoxy group, and a di-n-butoxyphenoxy group, the phenoxy group, the fluorophenoxy group, the difluorophenoxy group, the methylphenoxy group, the ethylphenoxy group, the dimethylphenoxy group, the diethylphenoxy group, the methoxyphenoxy group, the ethoxyphenoxy group, the dimethoxyphenoxy group, or the diethoxyphenoxy group is more preferable, and the phenoxy group is particularly preferable.

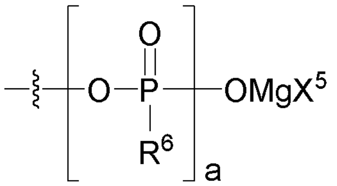 (III-1)

[in the general formula (III-1), $R^6$, $X^5$, and a are each the same as above].

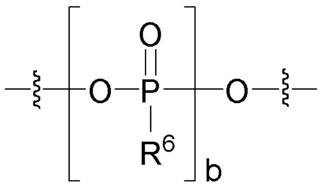 (III-2)

[in the general formula (III-2), $R^6$ and b are each the same as above].

a of the general formula (III-1) is preferably 1 or 2, and more preferably 1.

b of the general formula (III-2) is preferably 1 or 2, and more preferably 2.

$X^5$ of the general formula (III-1) is a chlorine atom or a bromine atom, and the chlorine atom is preferable.

Examples of the "alkyl group having 1 to 6 carbon atoms, which has a halogeno group or an alkoxy group as a substituent or is unsubstituted," in $R^6$ of the general formulae (III-1) and (III-2) include the same ones as those of the "alkyl group having 1 to 6 carbon atoms, which has a halogeno group or an alkoxy group as a substituent or is unsubstituted," in $R^3$ and $R^4$ of the general formula (II), and preferred ones thereof are also the same.

Examples of the alkoxy group having 1 to 6 carbon atoms in $R^6$ of the general formulae (III-1) and (III-2) include the same ones as those of the alkoxy group having 1 to 6 carbon atoms in $R^1$ of the general formula (I), and preferred ones thereof are also the same.

Examples of the "aryl group having 6 to 10 carbon atoms, which has a halogeno group, an alkyl group, a haloalkyl group, or an alkoxy group as a substituent or is unsubstituted," in $R^6$ of the general formulae (III-1) and (III-2) include the same ones as those of the "aryl group having 6 to 10 carbon atoms, which has a halogeno group, an alkyl group, a haloalkyl group, or an alkoxy group as a substituent or is unsubstituted," in $R^2$ to $R^4$ of the general formula (II), and preferred ones thereof are also the same.

Examples of the "aryloxy group having 6 to 10 carbon atoms, which has a halogeno group, an alkyl group, a haloalkyl group, or an alkoxy group as a substituent or is unsubstituted," in $R^6$ of the general formulae (III-1) and (III-2) include the same ones as those of the "aryloxy group having 6 to 10 carbon atoms, which has a halogeno group, an alkyl group, a haloalkyl group, or an alkoxy group as a substituent or is unsubstituted," in $R^5$ of the general formula (III), and preferred ones thereof are also the same.

As $R^6$ of the general formulae (III-1) and (III-2), an -OMgCl group; an -OMgBr group; an alkyl group having 1 to 6 carbon atoms, which has a halogeno group or an alkoxy group having 1 to 6 carbon atoms as a substituent or is unsubstituted; an alkoxy group having 1 to 6 carbon atoms; a phenyl group which has a halogeno group, an alkyl group

having 1 to 6 carbon atoms, a haloalkyl group having 1 to 6 carbon atoms, or an alkoxy group having 1 to 6 carbon atoms, as a substituent or is unsubstituted; or a phenoxy group which has a halogeno group, an alkyl group having 1 to 6 carbon atoms, a haloalkyl group having 1 to 6 carbon atoms, or an alkoxy group having 1 to 6 carbon atoms as a substituent or is unsubstituted is preferable, the -OMgCl group; the -OMgBr group; the unsubstituted alkyl group having 1 to 6 carbon atoms; the alkoxy group having 1 to 6 carbon atoms; a phenyl group which has a fluoro group, a linear alkyl group of 1 to 4 carbon atoms, or a linear alkoxy group having 1 to 4 carbon atoms as a substituent or is unsubstituted; or a phenoxy group which has a fluoro group, a linear alkyl group having 1 to 4 carbon atoms, or a linear alkoxy group having 1 to 4 carbon atoms as a substituent or is unsubstituted is more preferable, the -OMgCl group; an unsubstituted alkyl group having 1 to 4 carbon atoms; an alkoxy group having 1 to 4 carbon atoms; the unsubstituted phenyl group; or the unsubstituted phenoxy group is still more preferable; and the -OMgCl group; the unsubstituted linear alkyl group having 1 to 4 carbon atoms; a linear alkoxy group having 1 to 4 carbon atoms; the unsubstituted phenyl group; or the unsubstituted phenoxy group is particularly preferable. Specific examples thereof include the -OMgCl group, a methyl group, an ethyl group, an n-propyl group, an n-butyl group, a methoxy group, an ethoxy group, an n-propoxy group, an n-butoxy group, a phenyl group, and a phenoxy group, the -OMgCl group, the methyl group, the ethyl group, the methoxy group, the ethoxy group, the phenyl group, or the phenoxy group is preferable, and the -OMgCl group is more preferable.

Specific examples of the group represented by the general formula (III-1) include a group represented by the following general formula (III-4).

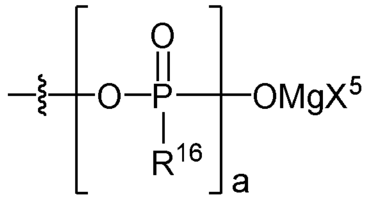

(III-4)

[in the general formula (III-4), a pieces of $R^{16}$'s each independently represent an -OMgCl group, an -OMgBr group, an unsubstituted alkyl group having 1 to 6 carbon atoms, an alkoxy group having 1 to 6 carbon atoms, the group represented by the general formula (II-1), or the group represented by the general formula (III-3), and $X^5$ and a are each the same as above].

Examples of the unsubstituted alkyl group having 1 to 6 carbon atoms in $R^{16}$ of the general formula (III-4) include the same ones as those of the alkyl group having 1 to 6 carbon atoms in $R^1$ of the general formula (I), and preferred ones thereof are also the same.

Examples of the alkoxy group having 1 to 6 carbon atoms in $R^{16}$ of the general formula (III-4) include the same ones as those of the alkoxy group having 1 to 6 carbon atoms in $R^1$ of the general formula (I), and preferred ones thereof are also the same.

As $R^{16}$ of the general formula (III-4), the -OMgCl group, a methyl group, an ethyl group, an n-propyl group, an n-butyl group, a methoxy group, an ethoxy group, an n-propoxy group, an n-butoxy group, a phenyl group, or a phenoxy group is preferable, the -OMgCl group, the methyl group, the ethyl group, the methoxy group, the ethoxy group, the phenyl group, or the phenoxy group is more preferable, and the -OMgCl group is particularly more preferable.

Among the groups represented by the general formula (III-4), a group represented by the following formula (III-5) is preferable.

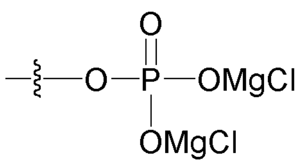

(III-5)

In a case where two $R^5$'s in the general formula (III) form the general formula (III-2), the general formula (III) has a ring structure represented by the following general formula (III-6).

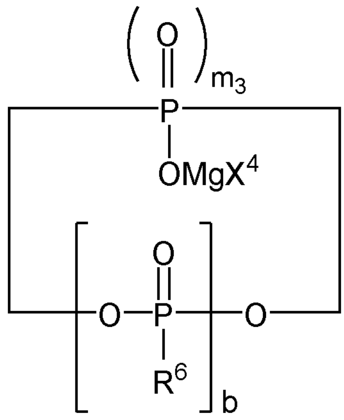

(III-6)

[in the general formula (III-6), $m_3$ represents 0 or 1, and $R^6$, $X^4$, and b are each the same as above].

$m_3$ of the general formula (III-6) is 0 or 1, and preferably 1.

Specific examples of the general formula (III-2) include the following general formula (III-7).

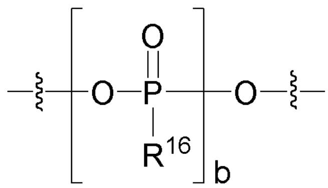

(III-7)

[in the general formula (III-7), $R^{16}$ and b are each the same as above].

Among the general formulae (III-7), the following formula (III-8) is preferable.

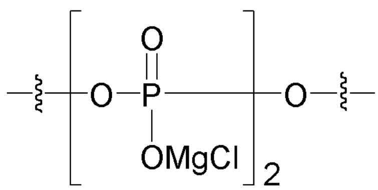

(III-8)

As $R^5$ of the general formula (III), an -OMgCl group; an -OMgBr group; an alkyl group having 1 to 6 carbon atoms, which has a halogeno group or an alkoxy group having 1 to 6 carbon atoms as a substituent or is unsubstituted; an alkoxy group having 1 to 6 carbon atoms; a phenyl group, which has a halogeno group, an alkyl group having 1 to 6 carbon atoms, a haloalkyl group having 1 to 6 carbon atoms, or an alkoxy group having 1 to 6 carbon atoms as a substituent or is unsubstituted; a phenoxy group which has a halogeno group, an alkyl group having 1 to 6 carbon atoms, a haloalkyl group having 1 to 6 carbon atoms, or an alkoxy group having 1 to 6 carbon atoms as a substituent or is unsubstituted; a group represented by the general formula (III-4); or a group of the general formula (III-7) formed by two $R^5$'s is preferable, the -OMgCl group; the -OMgBr group; the unsubstituted alkyl group having 1 to 6 carbon atoms; the alkoxy group having 1 to 6 carbon atoms; a phenyl group which has a fluoro group, a linear alkyl group having 1 to 4 carbon atoms, or a linear alkoxy group having 1 to 4 carbon atoms as a substituent or is unsubstituted; a phenoxy group which has a fluoro group, a linear alkyl group having 1 to 4 carbon atoms, or a linear alkoxy group having 1 to 4 carbon atoms as a substituent or is unsubstituted; the group represented by the general formula (III-4); or the group of the general formula (III-7) formed by two $R^5$'s is more preferable, the -OMgCl group; an unsubstituted alkyl group having 1 to 4 carbon atoms; an alkoxy group having 1 to 4 carbon atoms; the phenyl group which has a linear alkyl group having 1 to 4 carbon atoms or a linear alkoxy group having 1 to 4 carbon atoms as a substituent or is unsubstituted; the phenoxy group which has a linear alkyl group having 1 to 4 carbon atoms or a linear alkoxy group having 1 to 4 carbon atoms as a substituent or is unsubstituted; the group represented by the formula (III-5); or a group of the general formula (III-8) formed by two $R^5$'s is still more preferable, and the -OMgCl group; the linear unsubstituted alkyl group having 1 to 4 carbon atoms; a linear alkoxy group having 1 to 4 carbon atoms; the phenyl group which has a linear alkoxy group having 1 to 4 carbon atoms as a substituent or is unsubstituted; the unsubstituted phenoxy group; the group represented by the formula (III-5); or the group of the general formula (III-8) formed by two $R^5$'s is particularly preferable. Specific examples of $R^5$ include an -OMgCl group, a methyl group, an ethyl group, an n-propyl group, an n-butyl group, a methoxy

group, an ethoxy group, an n-propoxy group, an n-butoxy group, a phenyl group, a methoxyphenyl group, an ethoxyphenyl group, an n-propoxyphenyl group, an n-butoxyphenyl group, a dimethoxyphenyl group, a diethoxyphenyl group, a di-n-propoxyphenyl group, a di-n-butoxyphenyl group, a phenoxy group, a group represented by the formula (III-5), and a group of the general formula (III-8) formed by two $R^{5'}$s, the -OMgCl group, the methyl group, the ethyl group, the methoxy group, the ethoxy group, the phenyl group, the methoxyphenyl group, the ethoxyphenyl group, the dimethoxyphenyl group, the diethoxyphenyl group, the phenoxy group, the group represented by the formula (III-5), or the group of the general formula (III-8) formed by two $R^{5'}$s is preferable, and the -OMgCl group, the methyl group, the phenyl group, the methoxyphenyl group, the phenoxy group, or the group represented by the formula (III-5) is particularly preferable.

Specific preferred examples of the compound represented by the general formula (III) include a compound represented by the following general formula (III'-1) or (III'-2).

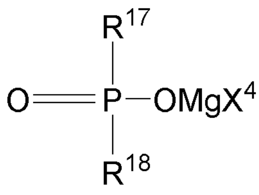

(III'-1)

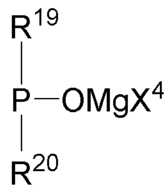

(III'-2)

[in the general formulae (III'-1) and (III'-2), $R^{17}$, $R^{19}$, and $R^{20}$ each independently represent an -OMgCl group, an -OMgBr group, an unsubstituted alkyl group having 1 to 6 carbon atoms, an alkoxy group having 1 to 6 carbon atoms, a group represented by the general formula (II-1), or a group represented by the general formula (III-3), $R^{18}$ represents an -OMgCl group, an -OMgBr group, an unsubstituted alkyl group having 1 to 6 carbon atoms, an alkoxy group having 1 to 6 carbon atoms, the group represented by the general formula (II-1), the group represented by the general formula (III-3), or the group represented by the general formula (III-4), $R^{17}$ and $R^{18}$ may form the general formula (III-7), and $X^4$ is the same as the above].

Examples of the unsubstituted alkyl group having 1 to 6 carbon atoms in $R^{17}$ to $R^{20}$ of the general formula (III'-1) and (III'-2) include the same ones as those of the alkyl group having 1 to 6 carbon atoms in $R^1$ of the general formula (I), and preferred ones thereof are also the same.

Examples of the alkoxy group having 1 to 6 carbon atoms in $R^{17}$ to $R^{20}$ of the general formula (III'-1) and (III'-2) include the same ones as those of the alkoxy group having 1 to 6 carbon atoms in $R^1$ of the general formula (I), and preferred ones thereof are also the same.

As $R^{17}$ of the general formula (III'-1), an -OMgCl group, a methyl group, an ethyl group, an n-propyl group, an n-butyl group, a methoxy group, an ethoxy group, an n-propoxy group, an n-butoxy group, a phenyl group, a methoxyphenyl group, an ethoxyphenyl group, an n-propoxyphenyl group, an n-butoxyphenyl group, a phenoxy group, or the formula (III-8) formed by $R^{17}$ and $R^{18}$ is preferable, the -OMgCl group, the methyl group, the ethyl group, the methoxy group, the ethoxy group, the phenyl group, the methoxyphenyl group, the ethoxyphenyl group, the phenoxy group, or the formula (III-8) formed by $R^{17}$ and $R^{18}$ is more preferable, and the -OMgCl group, the methyl group, the phenyl group, the methoxyphenyl group, or the phenoxy group is particularly preferable.

As $R^{18}$ of the general formula (III'-1), an -OMgCl group, a methyl group, an ethyl group, an n-propyl group, an n-butyl group, a methoxy group, an ethoxy group, an n-propoxy group, an n-butoxy group, a phenyl group, a methoxyphenyl group, an ethoxyphenyl group, an n-propoxyphenyl group, an n-butoxyphenyl group, a phenoxy group, a group represented by the formula (III-5), or the formula (III-8) formed by $R^{17}$ and $R^{18}$ is preferable, and the -OMgCl group, the methyl group, the ethyl group, the methoxy group, the ethoxy group, the phenyl group, the methoxyphenyl group, the ethoxyphenyl group, the phenoxy group, the group represented by the formula (III-5), or the formula (III-8) formed by $R^{17}$ and $R^{18}$ is more preferable, and the -OMgCl group, the methyl group, the phenyl group, the methoxyphenyl group, the phenoxy group, or the group represented by the formula (III-5) is particularly preferable.

As $R^{19}$ and $R^{20}$ of the general formula (III'-2), an -OMgCl group, a methyl group, an ethyl group, an n-propyl group, an n-butyl group, a methoxy group, an ethoxy group, an n-propoxy group, an n-butoxy group, a phenyl group, a methoxyphenyl group, an ethoxyphenyl group, an n-propoxyphenyl group, an n-butoxyphenyl group, or a phenoxy group is preferable, the -OMgCl group, the methyl group, the ethyl group, the methoxy group, the ethoxy group, the phenyl group, the methoxyphenyl group, the ethoxyphenyl group, or the phenoxy group is more preferable, and the -OMgCl group, the methyl group, the phenyl group, the methoxyphenyl group, or the phenoxy group is particularly preferable.

Specific examples of the compound represented by the general formula (III'-1) include the following compounds.

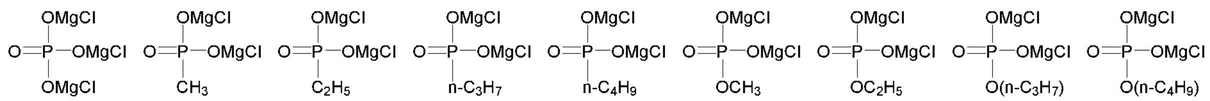

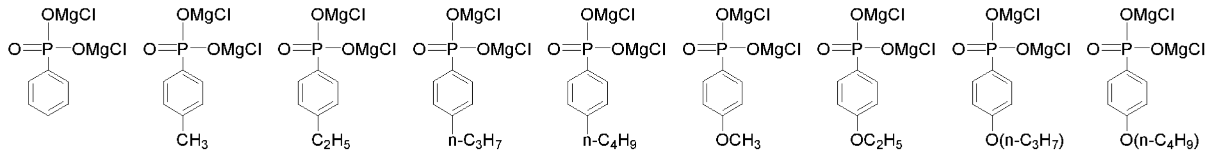

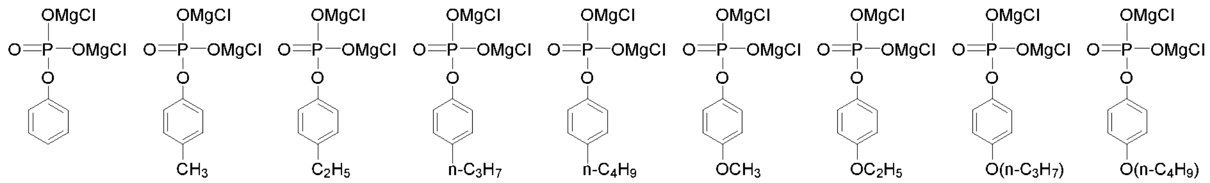

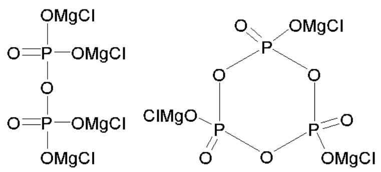

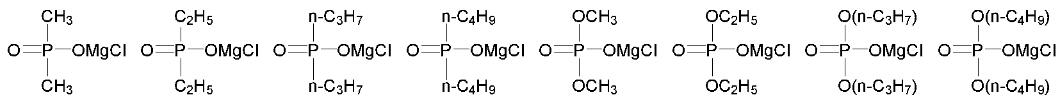

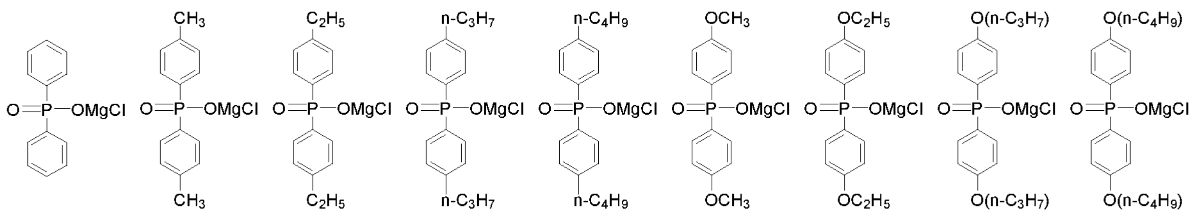

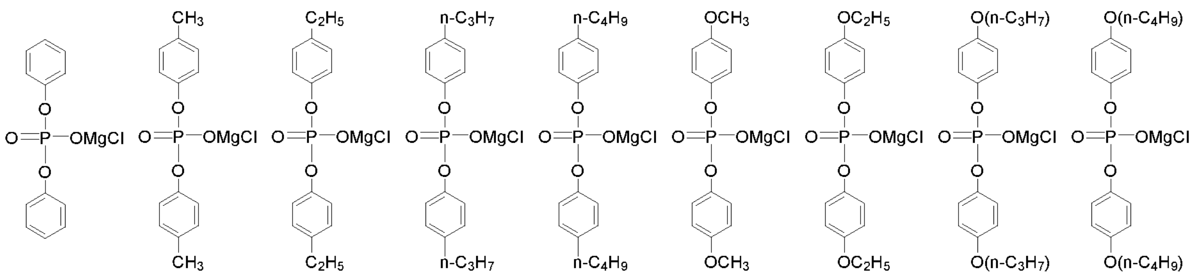

Among the specific examples, the following compounds are preferable.

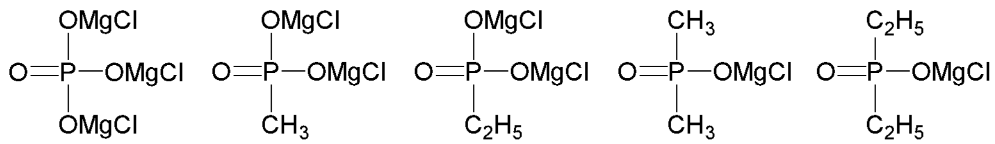

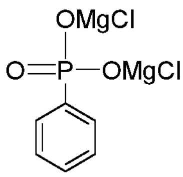 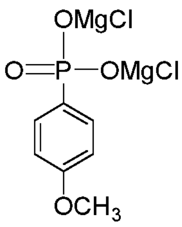 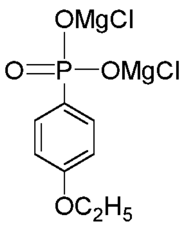 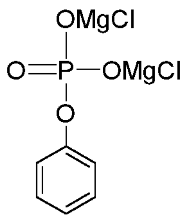 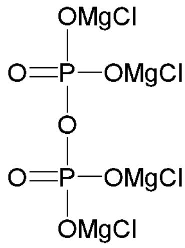

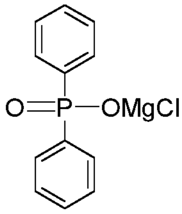 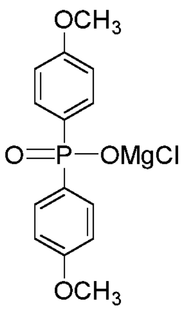 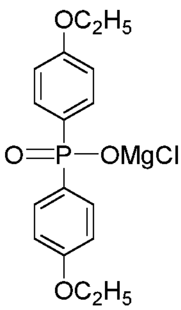 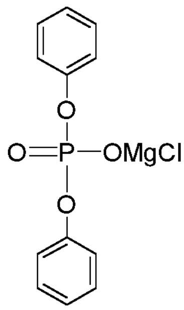

Among the specific examples, the following compounds are more preferable.

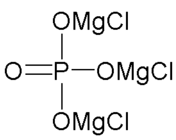 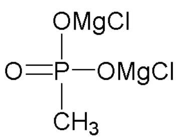 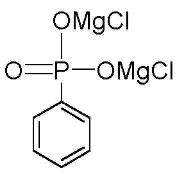 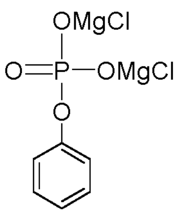 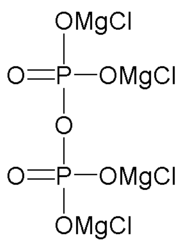

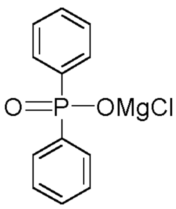 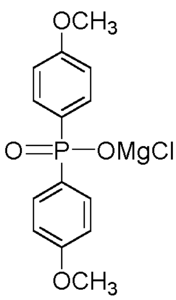 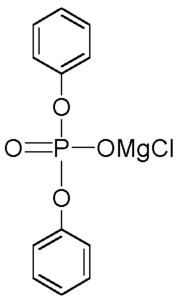

Specific examples of the compound represented by the general formula (III'-2) include the following compounds.

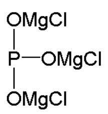 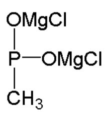 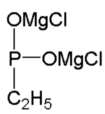 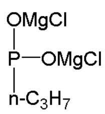 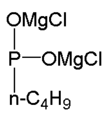 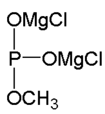 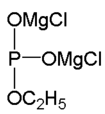 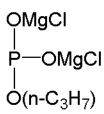 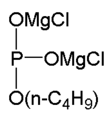

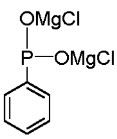 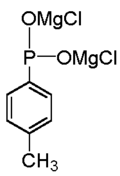 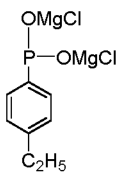 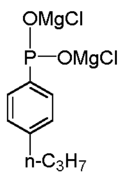 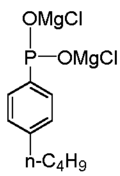 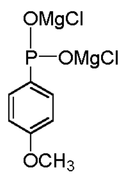 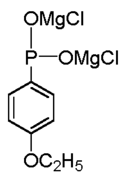 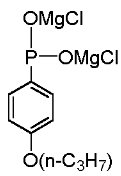 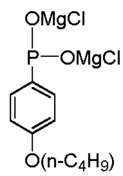

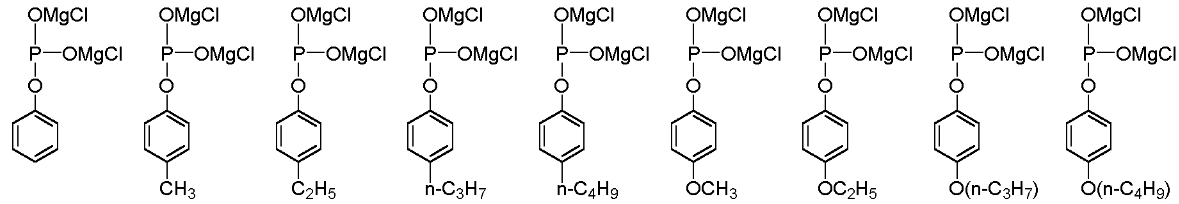

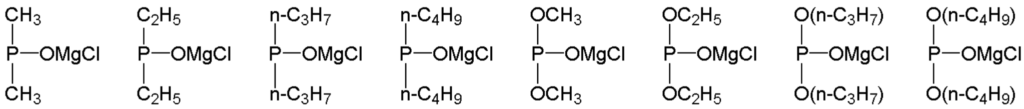

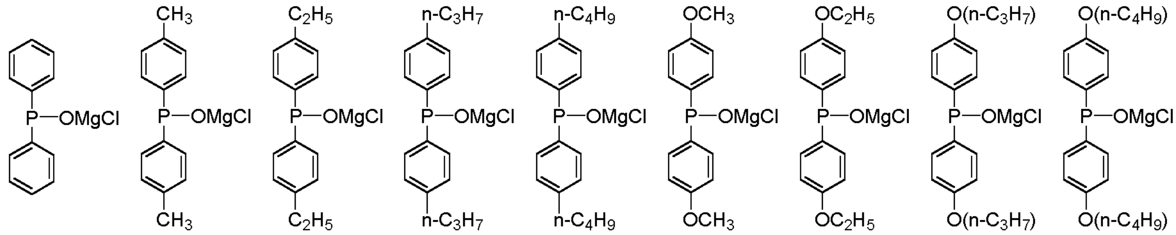

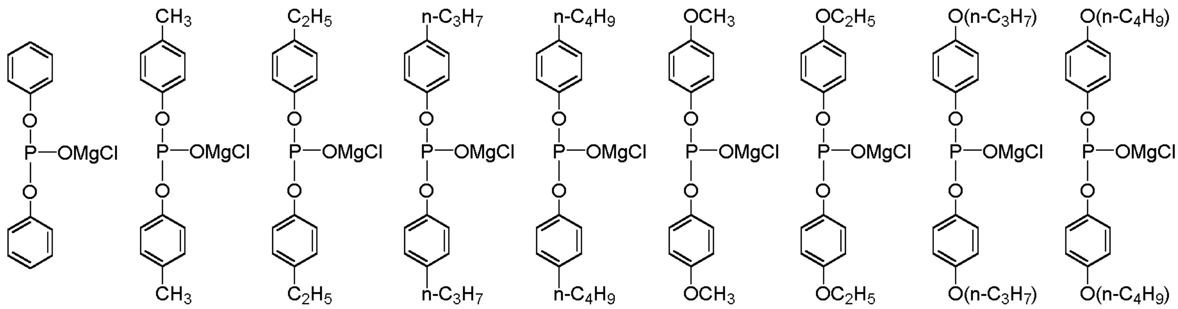

Among the specific examples, the following compounds are preferable.

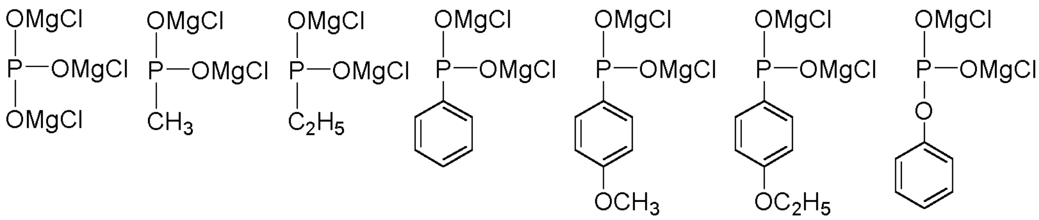

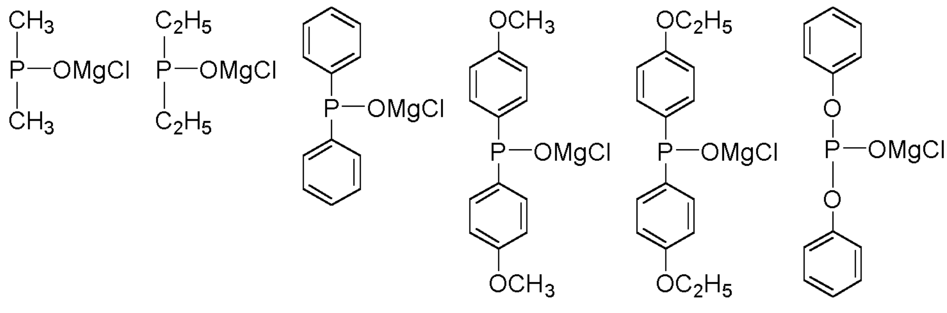

Among the specific examples, the following compounds are more preferable.

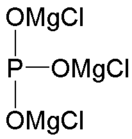 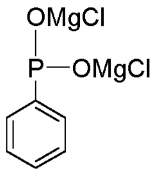 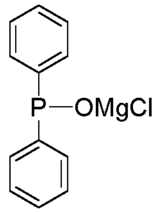 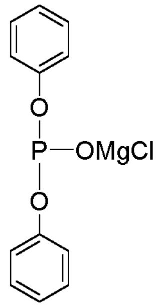

In addition to the specific examples, the specific examples of the compounds and the preferred compounds described in International Publication WO2017/204322 can be appropriately used as the compound represented by the general formula (III).

**Electrolytic Solution According to Present Invention: Compound Represented by General Formula (IV)**

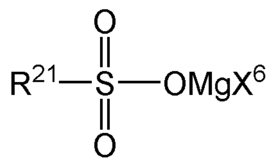 (IV)

[in the general formula (IV), $X^6$ and $R^{21}$ are each the same as above].

$X^6$ of the general formula (IV) is a chlorine atom or a bromine atom, and the chlorine atom is preferable.

The alkyl group having 1 to 10 carbon atoms in $R^{21}$ of the general formula (IV) may be in any of linear, branched, and cyclic forms, and is preferably linear and branched, and more preferably linear. In addition, among the alkyl groups having 1 to 10 carbon atoms, those having 1 to 6 carbon atoms are preferable, those having 1 to 4 carbon atoms are more preferable, and those having 1 or 2 carbon atoms are still more preferable. Specific examples of the alkyl groups include a methyl group, an ethyl group, an n-propyl group, an isopropyl group, an n-butyl group, an isobutyl group, a sec-butyl group, a tert-butyl group, an n-pentyl group, an n-hexyl group, an n-heptyl group, an n-octyl group, an n-nonyl group, and an n-decyl group, the methyl group, the ethyl group, the n-propyl group, the isopropyl group, the n-butyl group, the isobutyl group, the sec-butyl group, the tert-butyl group, the n-pentyl group, or the n-hexyl group is preferable, the methyl group, the ethyl group, the n-propyl group, the isopropyl group, the n-butyl group, the isobutyl group, the sec-butyl group, or the tert-butyl group is more preferable, the methyl group, the ethyl group, the n-propyl group, or the n-butyl group is more preferable, and the methyl group or the ethyl group is particularly preferable.

The haloalkyl group having 1 to 10 carbon atoms in $R^{21}$ of the general formula (IV) may be in any of linear, branched, and cyclic forms, and is preferably linear and branched, and more preferably linear. In addition, among the haloalkyl groups having 1 to 10 carbon atoms, those having 1 to 6 carbon atoms are preferable, and those having 1 to 4 carbon atoms are more preferable. Specific examples thereof include a fluoroalkyl group having 1 to 10 carbon atoms, a chloroalkyl group having 1 to 10 carbon atoms, a bromoalkyl group having 1 to 10 carbon atoms, and an iodoalkyl group having 1 to 10 carbon atoms, the fluoroalkyl group having 1 to 10 carbon atoms is preferable, a perfluoroalkyl group having 1 to 6 carbon atoms or a monofluoroalkyl group having 1 to 6 carbon atoms is more preferable, and a perfluoroalkyl group having 1 to 4 carbon atoms is still more preferable.

Specific examples of the haloalkyl group having 1 to 10 carbon atoms in $R^{21}$ of the general formula (IV) include a trifluoromethyl group, a pentafluoroethyl group, a heptafluoro-n-propyl group, a heptafluoroisopropyl group, a perfluoro-n-butyl group, a perfluoroisobutyl group, a perfluoro-sec-butyl group, a perfluoro-tert-butyl group, a perfluoro-n-pentyl group, a perfluoro-n-hexyl group, a perfluoro-n-heptyl group, a perfluoro-n-octyl group, a perfluoro-n-nonyl group, a perfluoro-n-decyl group, a fluoromethyl group, a fluoroethyl group, a fluoro-n-propyl group, a fluoroisopropyl group, a fluoro-n-butyl group, a fluoroisobutyl group, a fluoro-sec-butyl group, a fluoro-tert-butyl group, a fluoro-n-pentyl group, a fluoro-n-hexyl group, a fluoro-n-heptyl group, a fluoro-n-octyl group, a fluoro-n-nonyl group, a fluoro-n-decyl group, a trichloromethyl group, a pentachloroethyl group, a heptachloro-n-propyl group, a perchloro-n-butyl group, a perchloro-n-pentyl group, a perchloro-n-hexyl group, a perchloro-n-heptyl group, a perchloro-n-octyl group, a perchloro-n-nonyl group, a perchloro-n-decyl group, a tribromomethyl group, a pentabromoethyl group, a heptabromo-n-propyl group, a perbromo-n-butyl group, a perbromo-n-pentyl group, a perbromo-n-hexyl group, a perbromo-n-heptyl group, a perbromo-n-octyl group, a perbromo-n-nonyl group, a perbromo-n-decyl group, a triiodomethyl group, a pentaiodoethyl group, a heptaiodo-n-propyl group, a periodo-n-butyl group, a periodo-n-pentyl group, a periodo-n-hexyl group, a periodo-n-heptyl group, a periodo-n-octyl group, a periodo-n-nonyl group, and a periodo-n-decyl group. Among these, the trifluoromethyl group, the pentafluoroethyl group, the heptafluoro-n-propyl group, the heptafluoroisopropyl group, the perfluoro-n-butyl group, the perfluoroisobutyl group, the perfluoro-sec-butyl group, or the perfluoro-tert-butyl group is preferable, and the trifluoromethyl group, the pentafluoroethyl group, the heptafluoro-n-propyl group, or the perfluoro-n-butyl group is more preferable.

The "alkyl group having 1 to 10 carbon atoms, which has an $-SO_3MgCl$ group or an $-SO_3MgBr$ group as a substituent" and the "haloalkyl group having 1 to 10 carbon atoms, which has an $-SO_3MgCl$ group or an $-SO_3MgBr$ group as a substituent" in $R^{21}$ of the general formula (IV) are those in which one or a plurality of hydrogen atoms on an alkyl group or a haloalkyl group are substituted with an $-SO_3MgCl$ group or an $-SO_3MgBr$ group, and among these, those in which one hydrogen atom is substituted with an $-SO_3MgCl$ group or an $-SO_3MgBr$ group are preferable, and those in which one hydrogen atom is substituted with an $-SO_3MgCl$ group are more preferable. In a case where a plurality of hydrogen atoms are substituted, those in which the hydrogen atoms are all substituted with $-SO_3MgCl$ groups or all substituted with $-SO_3MgBr$ groups are preferable, and those in which hydrogen atoms are all substituted with $-SO_3MgCl$ groups are more preferable. In addition, the $-SO_3MgCl$ group or the $-SO_3MgBr$ group may be bonded to any of the carbon atoms constituting the alkyl group or the haloalkyl group, and are preferably bonded to the carbon atom at a terminal of the alkyl group or the haloalkyl group.

As the "alkyl group having 1 to 10 carbon atoms, which has an $-SO_3MgCl$ group or an $-SO_3MgBr$ group as a substituent or is unsubstituted," in $R^{21}$ of the general formula (IV), an alkyl group having 1 to 6 carbon atoms, which has an $-SO_3MgCl$ group or an $-SO_3MgBr$ group as a substituent or is unsubstituted is preferable, an alkyl group having 1 to 6 carbon atoms, which has an $-SO_3MgCl$ group as a substituent or is unsubstituted is more preferable, and an alkyl group having 1 to 4 carbon atoms, which has an $-SO_3MgCl$ group as a substituent or is unsubstituted is still more preferable. Specific examples of the alkyl group include a methyl group, an ethyl group, an n-propyl group, an isopropyl group, an n-butyl group, an isobutyl group, a sec-butyl group, a tert-butyl group, a $-CH_2-SO_3MgCl$ group, a $-C_2H_4-SO_3MgCl$ group, a $-C_3H_6-SO_3MgCl$ group, and a $-C_4H_7-SO_3MgCl$ group, and the methyl group, the ethyl group, the n-propyl group, the n-butyl group, the $-CH_2-SO_3MgCl$ group, the $-C_2H_4-SO_3MgCl$ group, the $-C_3H_6-SO_3MgCl$ group, or the $-C_4H_7-SO_3MgCl$ group is preferable, and the methyl group, the ethyl group, the $-CH_2-SO_3MgCl$ group, or the $-C_2H_4-SO_3MgCl$ group is more preferable.

As the "haloalkyl group having 1 to 10 carbon atoms, which has an $-SO_3MgCl$ group or an -SO3MgBr group as a substituent or is unsubstituted," in $R^{21}$ of the general formula (IV), an unsubstituted haloalkyl group having 1 to 10 carbon atoms is preferable, an unsubstituted fluoroalkyl group having 1 to 10 carbon atoms is more preferable, an unsubstituted fluoroalkyl group having 1 to 6 carbon atoms is still more preferable, and an unsubstituted perfluoroalkyl group having 1 to 4 carbon atoms is particularly preferable. Specific examples of the haloalkyl group include a trifluoromethyl group, a pentafluoroethyl group, a heptafluoro-n-propyl group, a heptafluoroisopropyl group, a perfluoro-n-butyl group, a perfluoroisobutyl group, a perfluoro-sec-butyl group, and a perfluoro-tert-butyl group, and the trifluoromethyl group, the pentafluoroethyl group, the heptafluoro-n-propyl group, or the perfluoro-n-butyl group is preferable.

Examples of the aryl group having 6 to 14 carbon atoms in $R^{21}$ of the general formula (IV) include a phenyl group, a naphthyl group, and an anthracenyl group, the phenyl group or the naphthyl group is preferable, and the phenyl group is more preferable.

Examples of the halogeno group, the alkyl group, and the alkoxy group as a substituent of the aryl group having 6 to 14 carbon atoms in $R^{21}$ in the general formula (IV) include the same ones as those as a substituent of the aryl group having 6 to 10 carbon atoms in $R^2$ to $R^4$ of the general formula (II), and preferred ones thereof are also the same.

The "aryl group having 6 to 14 carbon atoms, which has an $-SO_3MgCl$ group, an $-SO_3MgBr$ group, a halogeno group, an alkyl group, or an alkoxy group as a substituent", in $R^{21}$ of the general formula (IV) usually has 1 to 3 substituents, preferably has 1 or 2 substituents, and still more preferably one substituent.

The aryl group may have a substituent at any position. For example, in a case where the aryl group is a phenyl group, the phenyl group may have a substituent at any of the ortho position, the meta position, and the para position; in a case where the phenyl group has one substituent, it is preferable that the phenyl group has the substituent at the para position; and in a case where the phenyl group has two substituents, it is preferable that the phenyl group has the substituents at the meta positions.

As the "aryl group having 6 to 14 carbon atoms, which has an $-SO_3MgCl$ group, an $-SO_3MgBr$ group, a halogeno group, an alkyl group, or an alkoxy group as a substituent or is unsubstituted," in $R^{21}$ of the general formula (IV), a phenyl group which has an $-SO_3MgCl$ group, an $-SO_3MgBr$ group, a halogeno group, an alkyl group having 1 to 6 carbon atoms, or an alkoxy group having 1 to 6 carbon atoms as a substituent or is unsubstituted is preferable; a phenyl group which has an $-SO_3MgCl$ group, an $-SO_3MgBr$ group, a fluoro group, an alkyl group having 1 to 4 carbon atoms, or an alkoxy group having 1 to 4 carbon atoms as a substituent or is unsubstituted is more preferable; a phenyl group which has an $-SO_3MgCl$ group or an $-SO_3MgBr$ group as a substituent or is unsubstituted is still more preferable; a phenyl group which

has an $-SO_3MgCl$ group as a substituent or is unsubstituted is even still more preferable; and the unsubstituted phenyl group is particularly preferable. Specific examples of the aryl group include a phenyl group, a $-C_6H_4$-SO3MgCl group, a $-C_6H_4-SO_3MgBr$ group, a fluorophenyl group, a difluorophenyl group, a tolyl group, an ethyl phenyl group, an n-propyl phenyl group, an n-butylphenyl group, a xylyl group, a diethylphenyl group, a di-n-propylphenyl group, a di-n-butylphenyl group, a methoxyphenyl group, an ethoxyphenyl group, an n-propoxyphenyl group, an n-butoxyphenyl group, dimethoxyphenyl group, a diethoxyphenyl group, a di-n-propoxyphenyl group, and a di-n-butoxyphenyl group, the phenyl group, the $-C_6H_4-SO_3MgCl$ group, the $-C_6H_4-SO_3MgBr$ group, the fluorophenyl group, the tolyl group, the ethylphenyl group, the methoxyphenyl group, or the ethoxyphenyl group is preferable, the phenyl group, the $-C_6H_4-SO_3MgCl$ group, or the $-C_6H_4-SO_3MgBr$ group is more preferable, the phenyl group or the $-C_6H_4-SO_3MgCl$ group is still more preferable, and the phenyl group is particularly preferable.

As the "biphenyl group which has an $-SO_3MgCl$ group or an $-SO_3MgBr$ group as a substituent or is unsubstituted," in $R^{21}$ of the general formula (IV), a biphenyl group which has an $-SO_3MgCl$ group as a substituent or is unsubstituted is preferable, and the unsubstituted biphenyl group is more preferable.

As $R^{21}$ of the general formula (IV), an alkyl group having 1 to 6 carbon atoms, which has an $-SO_3MgCl$ group or an $-SO_3MgBr$ group as a substituent or is unsubstituted; an unsubstituted haloalkyl group having 1 to 10 carbon atoms; a phenyl group which has an $-SO_3MgCl$ group, an -SO3MgBr group, a halogeno group, an alkyl group having 1 to 6 carbon atoms, or an alkoxy group having 1 to 6 carbon atoms as a substituent or is unsubstituted; or a biphenyl group which has an $-SO_3MgCl$ group or an -SO3MgBr group as a substituent or is unsubstituted is preferable, an alkyl group having 1 to 6 carbon atoms, which has an $-SO_3MgCl$ group or an -SO3MgBr group as a substituent or is unsubstituted; an unsubstituted fluoroalkyl group having 1 to 10 carbon atom; a phenyl group which has an $-SO_3MgCl$ group, an -SO3MgBr group, a fluoro group, an alkyl group having 1 to 4 carbon atoms, or an alkoxy group having 1 to 4 carbon atoms as a substituent or is unsubstituted; or a biphenyl group which has an $-SO_3MgCl$ group or an -SO3MgBr group as a substituent or is unsubstituted is more preferable, an alkyl group having 1 to 6 carbon atoms, which has an $-SO_3MgCl$ group as a substituent or is unsubstituted; an unsubstituted fluoroalkyl group having 1 to 6 carbon atom; a phenyl group which has an $-SO_3MgCl$ group as a substituent or is unsubstituted; or a biphenyl group which has an $-SO_3MgCl$ group as a substituent or is unsubstituted is still more preferable, and an alkyl group having 1 to 4 carbon atoms, which has an $-SO_3MgCl$ group as a substituent or is unsubstituted; an unsubstituted perfluoroalkyl group having 1 to 4 carbon atom; the unsubstituted phenyl group; or the unsubstituted biphenyl group is particularly preferable.

Specific preferred examples of the compound represented by the general formula (IV) include a compound represented by the following general formula (IV'-1) or (IV'-2).

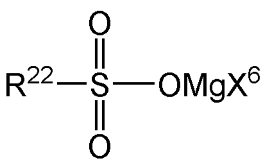

(IV'-1)

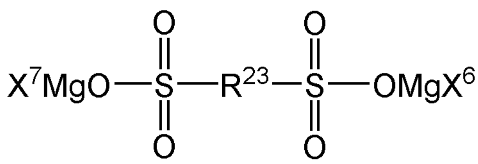

(IV'-2)

[in the general formulae (IV'-1) and (IV'-2), $X^7$ represents a chlorine atom or a bromine atom, $R^{22}$ represents an unsubstituted alkyl group having 1 to 6 carbon atoms; an unsubstituted haloalkyl group having 1 to 10 carbon atoms; a phenyl group which a halogeno group, an alkyl group having 1 to 6 carbon atoms, or an alkoxy group having 1 to 6 carbon atoms as a substituent or is unsubstituted; or an unsubstituted biphenyl group, $R^{23}$ represents an unsubstituted alkylene group having 1 to 6 carbon atoms, an unsubstituted phenylene group, or an unsubstituted biphenylene group, and $X^6$ is the same as above].

Examples of the unsubstituted alkyl group having 1 to 6 carbon atoms in $R^{22}$ of the general formula (IV'-1) include the same ones as those of the alkyl group having 1 to 6 carbon atoms in $R^1$ of the general formula (I), and preferred ones thereof are also the same.

Examples of the unsubstituted haloalkyl group having 1 to 10 carbon atoms in $R^{22}$ of the general formula (IV'-1) include the same ones as those of the alkyl group having 1 to 10 carbon atoms in $R^{21}$ of the general formula (IV), and preferred ones thereof are also the same.

Examples of the halogeno group, the alkyl group, and the alkoxy group as a substituent of the phenyl group in $R^{22}$ of the general formula (IV'-1) include the same ones as those as a substituent of the aryl group having 6 to 10 carbon atoms in $R^2$ to $R^4$ of the general formula (II), and preferred ones thereof are also the same.

The "phenyl group which has a halogeno group, an alkyl group having 1 to 6 carbon atoms or an alkoxy group having 1 to 6 carbon atoms as a substituent" in $R^{22}$ of the general formula (IV'-1) usually has 1 to 3 substituents, preferably 1 or 2 substituents, and more preferably one substituent.

The phenyl group may have a substituent at any of the ortho position, the meta position, and the para position; in a case where the phenyl group has one substituent, it is preferable that the phenyl group has the substituent at the para position; and in a case where the phenyl group has two substituents, it is preferable that the phenyl group has the substituents at the meta positions.

As the "phenyl group which has a halogeno group, an alkyl group having 1 to 6 carbon atoms, or an alkoxy group having 1 to 6 carbon atoms as a substituent or is unsubstituted" in $R^{22}$ of the general formula (IV'-1), a phenyl group which has a fluoro group, an alkyl group having 1 to 4 carbon atoms, or an alkoxy group having 1 to 4 carbon atoms as a substituent or is unsubstituted is preferable; and the unsubstituted phenyl group is more preferable. Specific examples of the phenyl group include a phenyl group, a fluorophenyl group, a difluorophenyl group, a tolyl group, an ethylphenyl group, an n-propylphenyl group, an n-butylphenyl group, a xylyl group, a diethylphenyl group, a di-n-propylphenyl group, a di-n-butylphenyl group, a methoxyphenyl group, an ethoxyphenyl group, an n-propoxyphenyl group, an n-butoxyphenyl group, a dimethoxyphenyl group, a diethoxyphenyl group, a di-n-propoxyphenyl group, and a di-n-butoxyphenyl group, the phenyl group, the fluorophenyl group, the tolyl group, the ethylphenyl group, the methoxyphenyl group, or the ethoxyphenyl group is preferable, and the phenyl group is more preferable.

As $R^{22}$ of the general formula (IV'-1), the unsubstituted alkyl group having 1 to 6 carbon atoms; the unsubstituted fluoroalkyl group having 1 to 10 carbon atoms; a phenyl group which has a fluoro group, an alkyl group having 1 to 4 carbon atoms, or an alkoxy group having 1 to 4 carbon atoms as a substituent or is unsubstituted; or the unsubstituted biphenyl group is preferable, the unsubstituted alkyl group having 1 to 6 carbon atoms; the unsubstituted fluoroalkyl group having 1 to 6 carbon atoms; the unsubstituted phenyl group; or the unsubstituted biphenyl group is more preferable, and the unsubstituted alkyl group having 1 to 4 carbon atoms; the unsubstituted perfluoroalkyl group having 1 to 4 carbon atoms, the unsubstituted phenyl group; or the unsubstituted biphenyl group is still more preferable. Specific examples of $R^{22}$ include a methyl group, an ethyl group, an n-propyl group, an isopropyl group, an n-butyl group, an isobutyl group, a sec-butyl group, a tert-butyl group, a trifluoromethyl group, a pentafluoroethyl group, a heptafluoro-n-propyl group, a heptafluoroisopropyl group, a perfluoro-n-butyl group, a perfluoroisobutyl group, a perfluoro-sec-butyl group, a perfluoro-tert-butyl group, a phenyl group, a fluorophenyl group, a tolyl group, an ethylphenyl group, a methoxyphenyl group, an ethoxyphenyl group, and a biphenyl group, the methyl group, the ethyl group, the n-propyl group, the n-butyl group, the trifluoromethyl group, the pentafluoroethyl group, or the heptafluoro-n-propyl group, the perfluoro-n-butyl group, the phenyl group, or the biphenyl group is preferable.

$X^7$ in the general formula (IV'-2) represents a chlorine atom or a bromine atom, and is preferably the chlorine atom.

As the unsubstituted alkylene group having 1 to 6 carbon atoms in $R^{23}$ of the general formula (IV'-2), those that are linear or branched are preferable, and those that are linear are more preferable. In addition, among the alkylene groups having 1 to 6 carbon atoms, those having 1 to 4 carbon atoms are preferable, and those having 1 or 2 carbon atoms are more preferable. Specific examples thereof include a methylene group, an ethylene group, a trimethylene group, a tetramethylene group, a pentamethylene group, and a hexamethylene group, the methylene group, the ethylene group, the trimethylene group, or the tetramethylene group is preferable, and the methylene group or the ethylene group is more preferable.

As $R^{23}$ of the general formula (IV'-2), the unsubstituted linear alkylene group having 1 to 6 carbon atoms, the unsubstituted phenylene group, or the unsubstituted biphenylene group is preferable, a methylene group, an ethylene group, a trimethylene group, or a tetramethylene group is preferable, and the methylene group or the ethylene group is more preferable.

Specific examples of the compound represented by the general formula (IV'-1) include the following compounds.

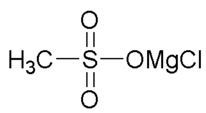 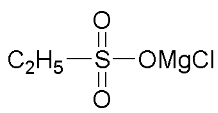 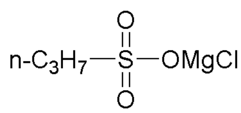 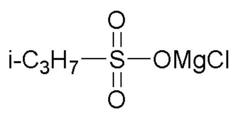

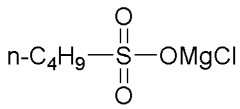 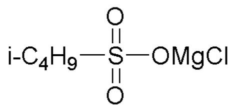 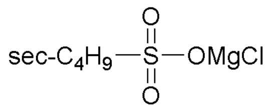 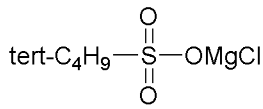

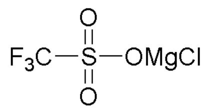 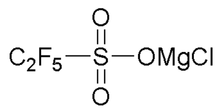 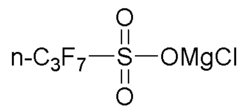 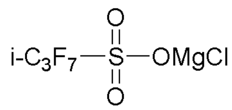

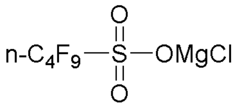 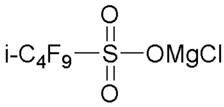 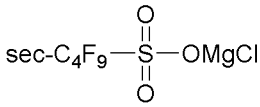 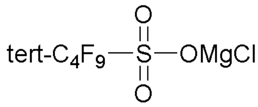

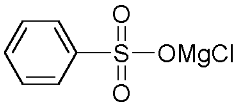 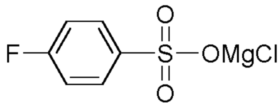 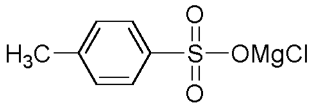 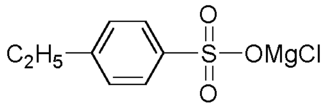

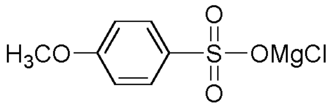 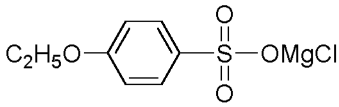 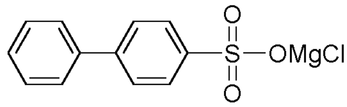

Specific examples of the compound represented by the general formula (IV'-2) include the following compounds.

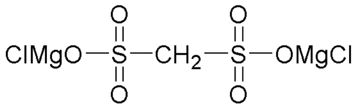 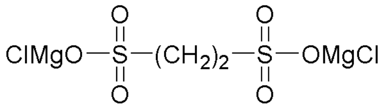 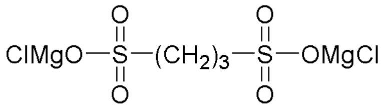

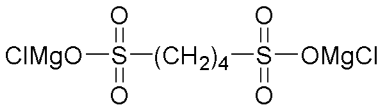 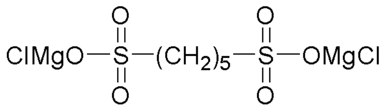 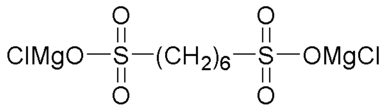

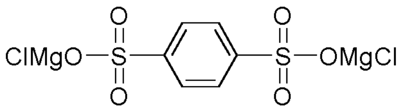 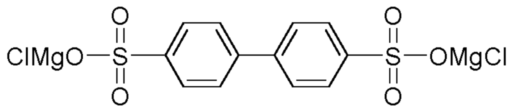

Among the specific examples, the following compounds are preferable.

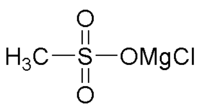 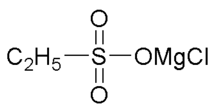 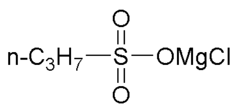 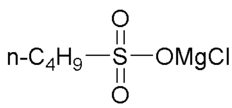

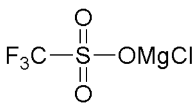 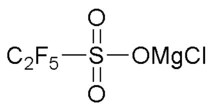 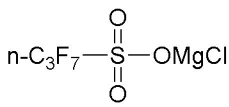 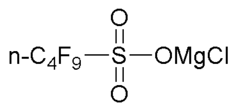

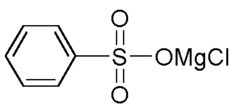 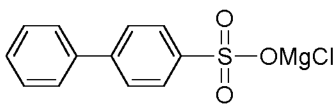 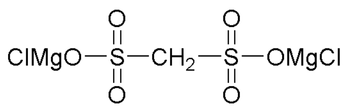

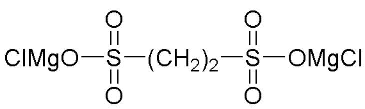 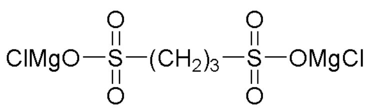 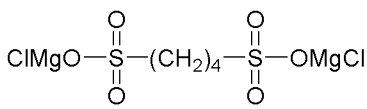

Among the specific examples, the following compounds are more preferable.

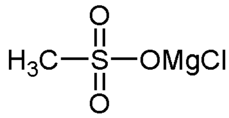 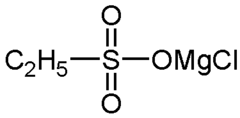 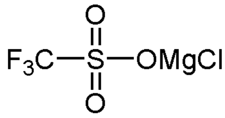 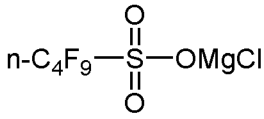

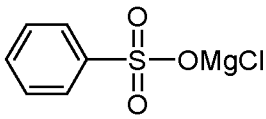 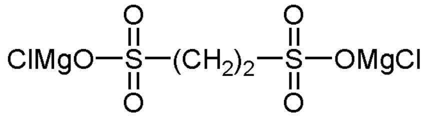

In addition to the specific examples, the specific examples of the compounds and the preferred compounds described in Japanese Patent Application No. 2018-246327 can be appropriately used as the compound represented by the general formula (IV).

**Electrolytic Solution According to Present Invention: Compound Represented by General Formulae (I) to (IV)**

The compounds represented by the general formulae (I) to (IV) may form a ligand, and for example, the compounds represented by the general formulae (I) to (IV) may form a ligand together with a solvent in the electrolytic solution according to the present invention which will be described later. Specifically, for example, in a case where the compounds represented by the general formulae (I) to (IV) form a ligand with tetrahydrofuran (THF), it is presumed that a ligand as described below is formed.

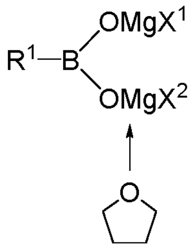 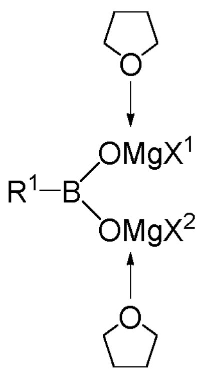 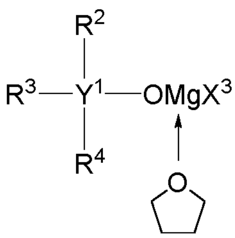 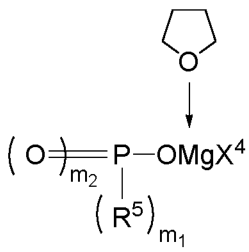 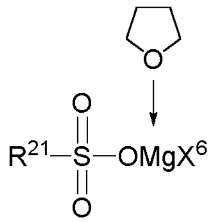

[In the formula, $R^1$ to $R^5$, $R^{21}$, $X^1$ to $X^4$, $X^6$, $Y^1$, $m_1$, and $m_2$ are each the same as above].

In addition, the compounds represented by the general formulae (I) to (IV) may form an aggregate in which a plurality of ligands are associated, and for example, in a case where two ligands are associated to form an aggregate, it is presumed to follow the below.

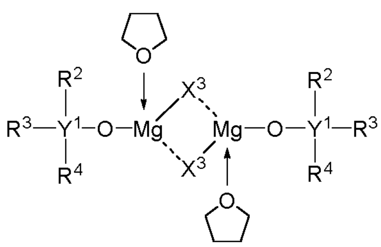 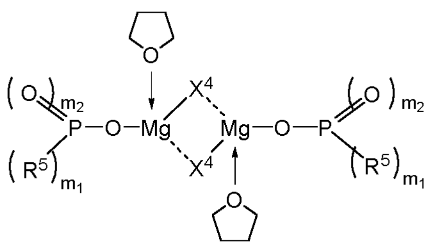 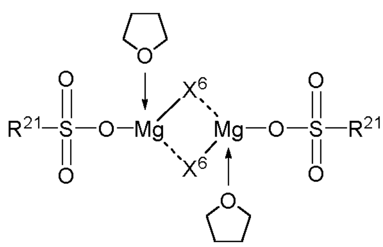

[In the formula, $R^2$ to $R^5$, $R^{21}$, $X^3$, $X^4$, $X^6$, $Y^1$, $m_1$, and $m_2$ are each the same as above].

As the compounds represented by the general formulae (I) to (IV), commercially available compounds or compounds appropriately synthesized by a method known per se may be used, and compounds appropriately synthesized by the production method described in, for example, the specifications of WO2016/084924, WO2017/170976, WO2017/204322, Japanese Patent Application No. 2018-246327, and the like may be used.

**Electrolytic Solution According to Present Invention: Lewis Acid**

The Lewis acid in the electrolytic solution according to the present invention is a Lewis acid which contains

beryllium (Be), boron (B), aluminum (Al), silicon (Si), tin (Sn), titanium (Ti), chromium (Cr), iron (Fe), or cobalt (Co) as an element. Examples of the Lewis acid specifically include a beryllium compound such as beryllium (II) fluoride, beryllium (II) chloride, and beryllium (II) bromide; a boron compound such as boron (III) fluoride, boron (III) chloride, boron (III) bromide, triphenoxyborane, phenyldichloroborane, and triphenylborane; an aluminum compound such as aluminum (III) chloride, aluminum (III) bromide, aluminum (III) iodide, dimethylaluminum chloride, diethylaluminum chloride, methylaluminum dichloride, ethylaluminum dichloride, trimethyl aluminum, trimethyl aluminum, and triphenyl aluminum; a silyl compound such as trimethylsilyl triflate, trimethylsilyl iodide, tert-butyldimethylsilyl triflate, and triisopropylsilyl triflate; a tin compound such as tin (IV) chloride, tin (IV) bromide, tin (II) chloride, and tin (II) triflate; a titanium compound such as titanium (IV) fluoride, titanium (IV) chloride, titanium (IV) bromide, and titanium (IV) iodide; a chromium compound such as chromium (II) fluoride, chromium (III) fluoride, chromium (II) chloride, chromium (III) chloride, chromium (II) bromide, chromium (III) bromide, chromium (II) iodide, and chromium (III) iodide; an iron compound such as iron (II) fluoride, iron (II) chloride, iron (III) chloride, iron (II) bromide, and iron (II) iodide; or a cobalt compound such as cobalt (II) fluoride, cobalt (II) chloride, cobalt (II) bromide, and cobalt (II) iodide, the boron compound or the aluminum compound is preferable, and the aluminum compound is more preferable. Among such the compounds, boron (III) chloride, aluminum (III) chloride, methylaluminum dichloride, dimethylaluminum chloride, or triphenyl aluminum is preferable, and aluminum (III) chloride ($AlCl_3$) is particularly preferable.

**Electrolytic Solution According to Present Invention: Compound Represented by General Formula (A)**

$$Mg[N(SO_2R^7)_2]_2 \qquad (A)$$

[in the general formula (A), $R^7$ is the same as above].

Examples of the alkyl group having 1 to 6 carbon atoms in $R^7$ of the general formula (A) include the same ones as those of the alkyl group having 1 to 6 carbon atoms in $R^1$ of the general formula (I), and preferred ones thereof are also the same.

The perfluoroalkyl group having 1 to 6 carbon atoms in $R^7$ of the general formula (A) may be in any of linear, branched, and cyclic forms, and is preferably linear and branched, and more preferably linear. In addition, among the perfluoroalkyl groups having 1 to 6 carbon atoms, a perfluoroalkyl group having 1 to 4 carbon atoms is preferable, and a perfluoroalkyl group having 1 or 2 carbon atoms is more preferable. Specific examples of the perfluoroalkyl group include a trifluoromethyl group, a pentafluoroethyl group, a heptafluoro-n-propyl group, a heptafluoroisopropyl group, a perfluoro-n-butyl group, a perfluoroisobutyl group, a perfluoro-sec-butyl group, a perfluoro-tert-butyl group, a perfluorocyclobutyl group, a perfluoro-n-pentyl group, a perfluoroisopentyl group, a perfluoro-sec-pentyl group, a perfluoro-tert-pentyl group, a perfluoroneopentyl group, a perfluoro-2-methylbutyl group, a perfluoro-1,2-dimethylpropyl group, a perfluoro-1-ethylpropyl group, a perfluorocyclopentyl group, a perfluoro-n-hexyl group, a perfluoroisohexyl group, a perfluoro-sec-hexyl group, a perfluoro-tert-hexyl group, a perfluoro-2-methylpentyl group, a perfluoro-1,2-dimethylbutyl group, a perfluoro-2,3-dimethylbutyl group, a perfluoro-1-ethylbutyl group, and a perfluorocyclohexyl group, the trifluoromethyl group, the pentafluoroethyl group, the heptafluoro-n-propyl group, the heptafluoroisopropyl group, the perfluoro-n-butyl group, the perfluoroisobutyl group, the perfluoro-sec-butyl group, or the perfluoro-tert-butyl group is preferable, the trifluoromethyl group, the pentafluoroethyl group, the heptafluoro-n-propyl group, or the perfluoro-n-butyl group is more preferable, the trifluoromethyl group or the pentafluoroethyl group is still more preferable, and the trifluoromethyl group is particularly preferable.

Four $R^7$'s in the general formula (A) may be the same as or different from each other, but all of four $R^7$'s are preferably the same as each other.

As four $R^7$'s in the general formula (A), an alkyl group having 1 to 6 carbon atoms or a perfluoroalkyl group having 1 to 6 carbon atoms is preferable, and the perfluoroalkyl group having 1 to 6 carbon atoms is more preferable. Specific examples of four $R^7$'s include a methyl group, an ethyl group, an n-propyl group, an isopropyl group, an n-butyl group, an isobutyl group, a sec-butyl group, a tert-butyl group, a trifluoromethyl group, a pentafluoroethyl group, a heptafluoro-n-propyl group, a heptafluoroisopropyl group, a perfluoro-n-butyl group, a perfluoroisobutyl group, a perfluoro-sec-butyl group, a perfluoro-tert-butyl group; a phenyl group; and a perfluorophenyl group, the methyl group, the ethyl group, the n-propyl group, the n-butyl group, the trifluoromethyl group, the pentafluoroethyl group, the heptafluoro-n-propyl group, or the perfluoro-n-butyl group is preferable, the trifluoromethyl group or the pentafluoroethyl group is more preferable, and the trifluoromethyl group is particularly preferable.

Specific examples of the compound represented by the general formula (A) include magnesium bis(alkanesulfonyl)imides having 2 to 12 carbon atoms, such as magnesium bis(methanesulfonyl)imide, magnesium bis(ethanesulfonyl)imide, magnesium bis(n-propanesulfonyl)imide, magnesium bis(isopropanesulfonyl)imide, magnesium bis(n-butanesulfonyl)imide, magnesium bis(isobutanesulfonyl)imide, magnesium bis(sec-butanesulfonyl)imide, magnesium

bis(tert-butanesulfonyl)imide, magnesium bis(cyclobutanesulfonyl)imide, magnesium bis(n-pentanesulfonyl)imide, magnesium bis(isopentanesulfonyl)imide, magnesium bis(sec-pentanesulfonyl)imide, magnesium bis(tert-pentanesulfonyl)imide, magnesium bis(neopentanesulfonyl)imide, magnesium bis(2-methylbutanesulfonyl)imide, magnesium bis(1,2-dimethylpropanesulfonyl)imide, magnesium bis(1-ethylpropanesulfonyl)imide, magnesium bis(cyclopentanesulfonyl)imide, magnesium bis(n-hexanesulfonyl)imide, magnesium bis(isohexanesulfonyl)imide, magnesium bis(sec-hexanesulfonyl)imide, magnesium bis(tert-hexanesulfonyl)imide, magnesium bis(neohexanesulfonyl)imide, magnesium bis(2-methylpentanesulfonyl)imide, magnesium bis(1,2-dimethylbutanesulfonyl)imide, magnesium bis(2,3-dimethylbutanesulfonyl)imide, magnesium bis(1-ethylbutanesulfonyl)imide, and magnesium bis(cyclohexanesulfonyl)imide; magnesium bis(perfluoroalkanesulfonyl)imides having 2 to 12 carbon atoms, such as magnesium bis(trifluoromethanesulfonyl)imide, magnesium bis(pentafluoroethanesulfonyl)imide, magnesium bis(heptafluoro-n-propanesulfonyl)imide, magnesium bis(heptafluoroisopropanesulfonyl)imide, magnesium bis(perfluoro-n-butanesulfonyl)imide, magnesium bis(perfluoroisobutanesulfonyl)imide, magnesium bis(perfluoro-sec-butanesulfonyl)imide, magnesium bis(perfluoro-tert-butanesulfonyl)imide, magnesium bis(perfluorocyclobutanesulfonyl)imide, magnesium bis(perfluoro-n-pentanesulfonyl)imide, magnesium bis(perfluoroisopentanesulfonyl)imide, magnesium bis(perfluoro-sec-pentanesulfonyl)imide, magnesium bis(perfluoro-tert-pentanesulfonyl)imide, magnesium bis(perfluoroneopentanesulfonyl)imide, magnesium bis(perfluoro-2-methylbutanesulfonyl)imide, magnesium bis(perfluoro-1,2-dimethylpropanesulfonyl)imide, magnesium bis(perfluoro-1-ethylpropanesulfonyl)imide, magnesium bis(perfluorocyclopentanesulfonyl)imide, magnesium bis(perfluoro-n-hexanesulfonyl)imide, magnesium bis(perfluoroisohexanesulfonyl)imide, magnesium bis(perfluoro-sec-hexanesulfonyl)imide, magnesium bis(perfluoro-tert-hexanesulfonyl)imide, magnesium bis(perfluoroneohexanesulfonyl)imide, magnesium bis(perfluoro-2-methylpentanesulfonyl)imide, magnesium bis(perfluoro-1,2-dimethylbutanesulfonyl)imide, magnesium bis(perfluoro-2,3-dimethylbutanesulfonyl)imide, magnesium bis(perfluoro-1-ethylbutanesulfonyl)imide, and magnesium bis(perfluorocyclohexanesulfonyl)imide; magnesium bis(phenylsulfonyl)imide; and magnesium bis(perfluorophenylsulfonyl)imide.

Among the specific examples, the magnesium bis(alkanesulfonyl)imide having 2 to 12 carbon atoms and the magnesium bis(perfluoroalkanesulfonyl)imide having 2 to 12 carbon atoms are preferable, the magnesium bis(methanesulfonyl)imide, the magnesium bis(ethanesulfonyl)imide, the magnesium bis(n-propanesulfonyl)imide, and the magnesium bis(n-butanesulfonyl)imide; the magnesium bis(trifluoromethanesulfonyl)imide, the magnesium bis(pentafluoroethanesulfonyl)imide, the magnesium bis(heptafluoro-n-propanesulfonyl)imide, and the magnesium bis(perfluoro-n-butanesulfonyl)imide are more preferable, the magnesium bis(trifluoromethanesulfonyl)imide and the magnesium bis(pentafluoroethanesulfonyl)imide are still more preferable, and the magnesium bis(trifluoromethanesulfonyl)imide is particularly preferable.

**Electrolytic Solution According to Present Invention: Solvent**

As the solvent in the electrolytic solution according to the present invention, a solvent which is capable of dissolving the compound represented by any one of the general formulae (I) to (IV) and/or a Lewis acid or a compound represented by the general formula (A) is preferable. Examples of such a solvent include an ether-based solvent, a halogenated hydrocarbon-based solvent, a carbonate-based solvent, a nitrile-based solvent, and a sulfone-based solvent, and the solvent may be a mixture of two or more of those solvents.

Examples of the ether-based solvent include diethyl ether, tetrahydrofuran, 2-methyltetrahydrofuran, diisopropyl ether, 1,2-dimethoxyethane, diethylene glycol dimethyl ether (diglyme), triethylene glycol dimethyl ether (triglyme), tetraethylene glycol dimethyl ether (tetraglyme), cyclopentyl methyl ether, tert-butyl methyl ether, and 1,4-dioxane.

Examples of the halogenated hydrocarbon-based solvent include dichloromethane, chloroform, carbon tetrachloride, and 1,2-dichloroethane.

Examples of the carbonate-based solvent include dimethyl carbonate, diethyl carbonate, ethyl methyl carbonate, and propylene carbonate.

Examples of the nitrile-based solvent include acetonitrile, propionitrile, butyronitrile, succinonitrile, pimeronitrile, and methoxypropionitrile.

Examples of the sulfone-based solvent include sulfolane, dimethyl sulfone, ethyl methyl sulfone, methyl-n-propyl sulfone, methyl isopropyl sulfone, n-butyl-methyl sulfone, isobutyl methyl sulfone, sec-butyl methyl sulfone, and tert-butyl methyl sulfone, diethyl sulfone, ethyl-n-propyl sulfone, ethyl isopropyl sulfone, n-butyl ethyl sulfone, isobutyl ethyl sulfone, sec-butyl ethyl sulfone, tert-butyl ethyl sulfone, di-n-propyl sulfone, diisopropyl sulfone, n-butyl-n-propyl sulfone, and di-n-butyl sulfone.

Among the specific examples, the ether-based solvent or the sulfone-based solvent is preferable, and the ether-based solvent is more preferable.

Among these solvents, tetrahydrofuran, 1,2-dimethoxyethane, diglyme, triglyme, tetraglyme, or sulfolane is preferable, tetrahydrofuran, diglyme, triglyme, or tetraglyme is more preferable, and tetrahydrofuran or triglyme is particularly preferable.

**Electrolytic Solution According to Present Invention**

The electrolytic solution according to the present invention is a mixture of a compound represented by any one of the general formulae (I) to (IV), a Lewis acid or a compound represented by the general formula (A), and a solvent. Among these, the electrolytic solution is preferably a mixture of the compound represented by any one of the general formulae (I) to (IV), the Lewis acid, and the solvent; more preferably a mixture of the compound represented by the general formula (I), the Lewis acid, and the solvent; and still more preferably a mixture of a compound represented by the general formula (I'), an aluminum compound, and an ether-based solvent.

Specific examples of the electrolytic solution include an electrolytic solution obtained by mixing at least one compound selected from $B(OMgCl)_3$, $CH_3B(OMgCl)_2$, $C_2H_5B(OMgCl)_2$, $CH_3OB(OMgCl)_2$, $C_2H_5OB(OMgCl)_2$, $C_6H_5OB(OMgCl)_2$, $C_6H_5B(OMgCl)_2$, $C_6H_4[B(OMgCl)_2]_2$, $(C_6H_4F)B(OMgCl)_2$, $(C_6H_3F_2)B(OMgCl)_2$, $[C_6H_4(CH_3)]B(OMgCl)_2$, $[C_6H_3(CH_3)_2]B(OMgCl)_2$, $[C_6H_4(OCH_3)]B(OMgCl)_2$, $[C_6H_3(OCH_3)_2]B(OMgCl)_2$, $[C_6H_4(C_6H_5)]B(OMgCl)_2$, $[C_6H_4(OC_6H_5)]B(OMgCl)_2$, $C_{10}H_7B(OMgCl)_2$, $C_{14}H_9B(OMgCl)_2$, $(C_4H_3O)B(OMgCl)_2$, $(C_4H_3S)B(OMgCl)_2$, $(C_4H_3NH)B(OMgCl)_2$, $(C_5H_4N)B(OMgCl)_2$, or $(C_8H_5O)B(OMgCl)_2$, at least one aluminum compound selected from boron (III) chloride, aluminum (III) chloride, methylaluminum dichloride, dimethylaluminum chloride, or triphenylaluminum, and at least one ether-based solvent selected from tetrahydrofuran, diglyme, triglyme,or tetraglyme; an electrolytic solution obtained by mixing $B(OMgCl)_3$ or $C_6H_5B(OMgCl)_2$, aluminum (III) chloride, and tetrahydrofuran, triglyme, or a mixed solvent of the both is preferable; and an electrolytic solution obtained by mixing $B(OMgCl)_3$, aluminum (III) chloride, tetrahydrofuran, triglyme, or a mixed solvent of the both is particularly preferable. More specifically, "Maglution™ B01" ($B(OMgCl)_3$-$AlCl_3$ complex (1:6)/triglyme solution) or "Maglution™ B02" ($(B(OMgCl)_3)$-$AlCl_3$ complex (1:6)/triglyme-tetrahydrofuran (50:50 vol%) solution) manufactured by FUJIFILM Wako Pure Chemical Corporation)is preferable.

The concentration of the compound represented by any one of the general formulae (I) to (IV) in the electrolytic solution according to the present invention is usually from 0.01 mol/L to 5 mol/L, preferably from 0.05 mol/L to 3 mol/L, and more preferably from 0.1 mol/L to 1 mol/L.

The amount of the Lewis acid or the compound represented by the general formula (A) to be used in the electrolytic solution according to the present invention is usually from 0.5 equivalents to 36 equivalents, and preferably from 1 equivalent to 18 equivalents, with respect to moles of the compound represented by any one of the general formulae (I) to (IV).

More specifically, the amount of the Lewis acid or the compound represented by the general formula (A) to be used in the electrolytic solution according to the present invention is proportional to the total number of the -OMgCl groups and the -OMgBr groups contained in the molecule of the compound represented by any one of the general formulae (I) to (IV). That is, the amount of the Lewis acid or the compound represented by the general formula (A) to be used is usually from 0.5 equivalents to 4 equivalents, and preferably from 1 equivalent to 2 equivalents, with respect to the number of moles of the compound represented by any one of the general formulae (I) to (IV) per -OMgCl group or -OMgBr group contained in the molecule of the compound represented by any one of the general formulae (I) to (IV). For example, in a case where the total number of the -OMgCl groups and the -OMgBr groups contained in the molecule of the compound represented by any one of the general formulae (I) to (IV) is 2, the amount of the Lewis acid or the compound represented by the general formula (A) to be used is usually from 1 equivalent to 8 equivalents, and preferably from 2 equivalents to 4 equivalents, with respect to the number of moles of the compound represented by any one of the general formulae (I) to (IV); and in a case where the total number of the -OMgCl groups and the -OMgBr groups contained in the molecule of the compound represented by any one of the general formulae (I) to (IV) is 3, the amount of the Lewis acid or the compound represented by the general formula (A) to be used is usually from 1.5 equivalents to 12 equivalents, and preferably from 3 equivalents to 6 equivalents, with respect to the number of moles of the compound represented by any one of the general formulae (I) to (IV).

The electrolytic solution according to the present invention may contain additives such as a film-forming agent, an overcharge inhibitor, an oxygen scavenger, a dehydrating agent, and a flame retardant, which are usually used in this field, and additives having coordinating properties, such as a crown ether, in addition to the components.

The electrolytic solution according to the present invention can be used in a magnesium battery, and in a case where the electrolytic solution is used in a magnesium secondary battery, it exhibits high oxidation stability and can be used stably and repeatedly.

The electrolytic solution according to the present invention is produced by dissolving (mixing) the compound represented by any one of the general formulae (I) to (IV), and the Lewis acid or the compound represented by the general formula (A) in a solvent. More specifically, the electrolytic solution is produced by using 0.5 to 36 mol of the Lewis acid or the compound represented by the general formula (A) with respect to 1 mol of the compound represented by any one of the general formulae (I) to (IV), and adding and mixing those into the solvent to reach the concentration. In addition, during mixing, the components may be heated or cooled at a temperature in a range of -78°C to 300°C, as desired, and is preferably heated or cooled at a temperature in a range of 0°C to 150°C. In addition, filtration may be carried out, as desired, after mixing.

The electrolytic solution according to the present invention only needs to contain the compound represented by any one of the general formulae (I) to (IV), the Lewis acid or the compound represented by the general formula (A), and the solvent, and for example, the ligand is also encompassed in the present invention. That is, the electrolytic solution according to the present invention also encompasses an electrolytic solution obtained by mixing the ligand, the Lewis acid or the compound represented by the general formula (A), and as necessary, the solvent.
In a case where the compound represented by any one of the general formulae (I) to (IV) forms a ligand, the amounts of the Lewis acid or the compound represented by the general formula (A), and the solvent to be used may be appropriately adjusted, depending on the amount (moles) of the compound represented by any one of the general formulae (I) to (IV) constituting the ligand.
Hereinafter, the present invention will be described in detail with reference to Examples, but the present invention is not limited thereto.

Examples

Example 1: **Production of Magnesium Battery using Positive Electrode Active Material of Embodiment of Present invention**

A positive electrode mixture film was produced by a dry method in which 70 parts by mass of silver sulfate (I) ($Ag_2S_4$) (positive electrode active material: manufactured by FUJIFILM Wako Pure Chemical Corporation), 15 parts by mass of acetylene black (conductive auxiliary agent: manufactured by Denka Co., Ltd.), and 15 parts by mass of polytetrafluoroethylene (binder: manufactured by Sigma Aldrich Japan K. K.) were mixed. The positive electrode mixture film was pressure-bonded to a platinum mesh (current collector: 80 meshes, thickness of 80 $\mu$m) and vacuum-dried at 120°C for 3 hours to produce a positive electrode. The positive electrode, a negative electrode, a reference electrode, and an electrolytic solution were set in a glass cell (manufactured by BAS Inc.) in a glove box filled with argon gas to produce a magnesium battery. Further, a metal magnesium rod (manufactured by The Nilaco Corporation, purity of 99.95%, $\varphi$1.6 mm) was used for the negative electrode and the reference electrode, and Maglution™ B01 ($B(OMgCl)_3$-$AlCl_3$ complex (1:6)/triglyme solution: FUJIFILM Wako Pure Chemical Corporation) was used for the electrolytic solution.

**Comparative Example 1: Production of Magnesium Battery Using Silver Chloride**

A magnesium battery was produced in the same manner as in Example 1, except that silver chloride (AgCl) (manufactured by FUJIFILM Wako Pure Chemical Corporation) was used instead of silver sulfate (I) as the positive electrode active material.

**Comparative Example 2: Production of Magnesium Battery Using Copper Sulfate**

A magnesium battery was produced in the same manner as in Example 1, except that copper (II) sulfate ($CuSO_4$) (manufactured by FUJIFILM Wako Pure Chemical Corporation) was used instead of silver sulfate (I) as the positive electrode active material.

**Comparative Example 3: Production of Magnesium Battery Using Zinc Sulfate**

A magnesium battery was produced in the same manner as in Example 1, except that zinc sulfate (II) ($ZnSO_4$) (manufactured by FUJIFILM Wako Pure Chemical Corporation) was used instead of silver sulfate (I) as the positive electrode active material.

**Experimental Example 1: Charge-Discharge Test of Magnesium Battery**

Using the magnesium battery produced in Example 1, a charge-discharge test was carried out in a glove box filled with argon gas at a rate of 0.1 C within the cutoff potential of 0.7 to 2.8 V (vs. a reference electrode) at room temperature. Further, an electrochemical measurement system (manufactured by Bio-Logic Science Instruments) was used for the charge-discharge test.
The obtained charge-discharge curves at the first, third, and fifth cycles are shown in Fig. 1.
The horizontal axis (mAh/g) in the figure indicates a discharge capacity at each voltage, and the vertical axis (V) in the figure indicates a voltage of the positive electrode in a case where a reference electrode is used as a reference. In addition, the solid line in the figure indicates the result of the first cycle, the dotted line in the figure indicates the result of the third cycle, and the broken line in the figure represents the result of the fifth cycle.

**Experimental Example 2: Charge-Discharge Test of Magnesium Battery**

A charge-discharge test was carried out in the same manner as in Example 1, except that the magnesium battery produced in Comparative Example 1 was used instead of the magnesium battery produced in Example 1.
The obtained charge-discharge curves at the first, third, and fifth cycles are shown in Fig. 2.
The horizontal axis (mAh/g) in the figure indicates a discharge capacity at each voltage, and the vertical axis (V) in the figure indicates a voltage of the positive electrode in a case where a reference electrode is used as a reference. In addition, the solid line in the figure indicates the result of the first cycle, the dotted line in the figure indicates the result of the third cycle, and the broken line in the figure represents the result of the fifth cycle.
From the value of the discharge capacity of the positive electrode after each cycle obtained in Experimental Example 1 and Experimental Example 2, a capacity retention rate (%) after 1 to 5 cycles was calculated using the following equation.

$$\text{Capacity retention rate (\%)} = \text{Discharge capacity of each cycle} \div \text{Discharge capacity at first cycle} \times 100$$

The obtained results are shown in Fig. 3.
The horizontal axis in the figure indicates the number of cycles, and the vertical axis (%) in the figure indicates the capacity retention rate. In addition, the solid line in the figure indicates the result of Experimental Example 1 (magnesium battery obtained in Example 1), and the dotted line in the figure indicates the result of Experimental Example 2 (the magnesium battery obtained in Comparative Example 1).

**Experimental Example 3: Charge-Discharge Test of Magnesium Battery**

A charge-discharge test was carried out in the same manner as in Example 1, except that the magnesium battery produced in Comparative Example 2 was used instead of the magnesium battery produced in Example 1.
The obtained charge-discharge curves at the first, third, and fifth cycles are shown in Fig. 4.
The horizontal axis (mAh/g) in the figure indicates a discharge capacity at each voltage, and the vertical axis (V) in the figure indicates a voltage of the positive electrode in a case where a reference electrode is used as a reference. In addition, the solid line in the figure indicates the result of the first cycle, the dotted line in the figure indicates the result of the third cycle, and the broken line in the figure represents the result of the fifth cycle.

**Experimental Example 4: Charge-Discharge Test of Magnesium Battery**

A charge-discharge test was carried out in the same manner as in Experimental Example 1, except that the magnesium battery produced in Comparative Example 3 was used instead of the magnesium battery produced in Example 1.
The obtained charge-discharge curves at the first, third, and fifth cycles are shown in Fig. 5.
The horizontal axis (mAh/g) in the figure indicates a discharge capacity at each voltage, and the vertical axis (V) in the figure indicates a voltage of the positive electrode in a case where a reference electrode is used as a reference. In addition, the solid line in the figure indicates the result of the first cycle, the dotted line in the figure indicates the result of the third cycle, and the broken line in the figure represents the result of the fifth cycle.
From the results of Fig. 1, it was found that a magnesium battery using the positive electrode active material of the embodiment of the present invention has a high operating voltage of about 2.0 V with respect to magnesium, and can be repeatedly charged and discharged.
In addition, from the results of Fig. 3, it was found that a magnesium battery using the positive electrode active material of the embodiment of the present invention has a higher capacity retention rate than a magnesium battery in the related art using silver chloride as an active material.
Furthermore, from the results of Figs. 1, 4, and 5, it was found that a magnesium battery using silver (I) sulfate, which is the compound according to the present invention, as an active material show a very high discharge capacity, as compared with a magnesium battery using copper (II) sulfate or zinc (II) sulfate as an active material, even with the both batteries using the sulfates.

**Claims**

1. A positive electrode active material for a magnesium battery, comprising a compound represented by the following general formula (1):

$$Ag_pSO_4 \qquad (1)$$

in the general formula (1), p satisfies $0 < p \leq 2$.

2. The positive electrode active material according to claim 1, wherein in the general formula (1), p is 2.

3. A positive electrode material composition for a magnesium battery, comprising:

the positive electrode active material according to claim 1;
a conductive auxiliary agent; and
a binder.

4. A positive electrode for a magnesium battery, comprising:

the positive electrode active material according to claim 1;
a conductive auxiliary agent;
a binder; and
a current collector.

5. A magnesium battery comprising:

the positive electrode according to claim 4;
a negative electrode; and
an electrolytic solution.

6. The magnesium battery according to claim 5, wherein the electrolytic solution is a mixture of a compound represented by any one of the following general formulae (I) to (IV), a Lewis acid or a compound represented by the following general formula (A), and a solvent:

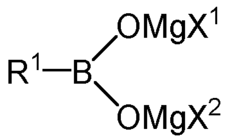
(I)

in the general formula (I), $X^1$ and $X^2$ each independently represent a chlorine atom or a bromine atom, and $R^1$ represents an -OMgCl group; an -OMgBr group; an alkyl group having 1 to 6 carbon atoms; an alkoxy group having 1 to 6 carbon atoms; a phenoxy group; an aryl group having 6 to 18 carbon atoms, which has a $-B(OMgCl)_2$ group, a $-B(OMgBr)_2$ group, a halogeno group, an alkyl group, an alkoxy group, a vinyl group, a phenyl group, or a phenoxy group as a substituent or is unsubstituted; or a monocyclic or bicyclic, heterocyclic group which has a $-B(OMgCl)_2$ group, a $-B(OMgBr)_2$ group, a halogeno group, an alkyl group, an alkoxy group, a vinyl group, a phenyl group, or a phenoxy group as a substituent or is unsubstituted;

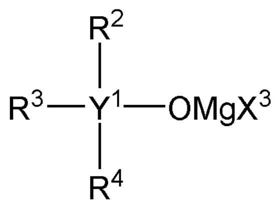
(II)

in the general formula (II), $Y^1$ represents a carbon atom or a silicon atom,
$X^3$ represents a chlorine atom or a bromine atom,

$R^2$ represents an aryl group having 6 to 10 carbon atoms, which has a halogeno group, an alkyl group, a haloalkyl group, or an alkoxy group as a substituent or is unsubstituted, and
$R^3$ and $R^4$ each independently represent an -OMgCl group; an -OMgBr group; an alkyl group having 1 to 6 carbon atoms, which has a halogeno group or an alkoxy group as a substituent or is unsubstituted; an alkenyl group having 2 to 6 carbon atoms; or an aryl group having 6 to 10 carbon atoms, which has a halogeno group, an alkyl group, a haloalkyl group, or an alkoxy group as a substituent or is unsubstituted;

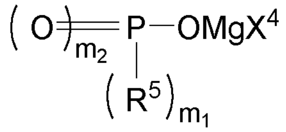
(III)

in the general formula (III), $m_1$ represents 0 or 2,
in a case of $m_1 = 0$, $m_2$ represents 2, and in a case of $m_1 = 2$, $m_2$ represents 0 or 1,
$X^4$ represents a chlorine atom or a bromine atom,
two $R^5$'s each independently represent an -OMgCl group; an -OMgBr group; an alkyl group having 1 to 6 carbon atoms, which has a halogeno group or an alkoxy group as a substituent or is unsubstituted; an alkoxy group having 1 to 6 carbon atoms; an aryl group having 6 to 10 carbon atoms, which has a halogeno group, an alkyl group, a haloalkyl group, or an alkoxy group as a substituent or is unsubstituted; an aryloxy group having 6 to 10 carbon atoms, which has a halogeno group, an alkyl group, a haloalkyl group, or an alkoxy group as a substituent or is unsubstituted; or a group represented by the following general formula (III-1):

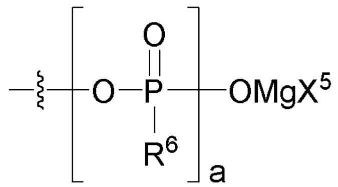
(III-1)

in the general formula (III-1), a represents an integer of 1 to 3,
$X^5$ represents a chlorine atom or a bromine atom,
a pieces of $R^6$'s each independently represent an -OMgCl group; an -OMgBr group; an alkyl group having 1 to 6 carbon atoms, which has a halogeno group or an alkoxy group as a substituent or is unsubstituted; an alkoxy group having 1 to 6 carbon atoms; an aryl group having 6 to 10 carbon atoms, which has a halogeno group, an alkyl group, a haloalkyl group, or an alkoxy group as a substituent or is unsubstituted; or an aryloxy group having 6 to 10 carbon atoms, which has a halogeno group, an alkyl group, a haloalkyl group, or an alkoxy group as a substituent or is unsubstituted;
two $R^5$'S may form the following general formula (III-2):

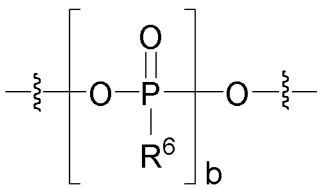
(III-2)

in the general formula (III-2), b represents an integer of 1 to 3, and $R^6$ is the same as above;

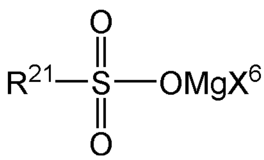
(IV)

in the general formula (IV), $X^6$ represents a chlorine atom or a bromine atom, and
$R^{21}$ represents an alkyl group having 1 to 10 carbon atoms, which has an $-SO_3MgCl$ group or an -SO3MgBr group as a substituent or is unsubstituted; a haloalkyl group having 1 to 10 carbon atoms, which has an $-SO_3MgCl$

group or an $-SO_3MgBr$ group- as a substituent or is unsubstituted; an aryl group having 6 to 14 carbon atoms, which has an $-SO_3MgCl$ group, an $-SO_3MgBr$ group, a halogeno group, an alkyl group, or an alkoxy group as a substituent or is unsubstituted; or a biphenyl group which has an $-SO_3MgCl$ group or an $-SO_3MgBr$ group as a substituent or is unsubstituted; and

$$Mg[N(SO_2R7)_2]_2 \qquad (A)$$

in the general formula (A), four $R^{7}$'s each independently represent an alkyl group having 1 to 6 carbon atoms, a perfluoroalkyl group having 1 to 6 carbon atoms, a phenyl group, or a perfluorophenyl group.

**7.** The magnesium battery according to claim 5,
wherein the electrolytic solution is a mixture of a compound represented by the following general formula (I), a Lewis acid, and a solvent:

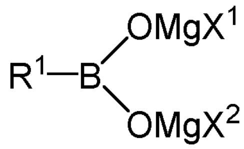

(I)

in the general formula (I), $X^1$ and $X^2$ each independently represent a chlorine atom or a bromine atom, and $R^1$ represents an -OMgCl group; an -OMgBr group; an alkyl group having 1 to 6 carbon atoms; an alkoxy group having 1 to 6 carbon atoms; a phenoxy group; an aryl group having 6 to 18 carbon atoms, which has a $-B(OMgCl)_2$ group, a $-B(OMgBr)_2$ group, a halogeno group, an alkyl group, an alkoxy group, a vinyl group, a phenyl group, or a phenoxy group as a substituent or is unsubstituted; or a monocyclic or bicyclic, heterocyclic group which has a $-B(OMgCl)_2$ group, a $-B(OMgBr)_2$ group, a halogeno group, an alkyl group, an alkoxy group, a vinyl group, a phenyl group, or a phenoxy group as a substituent or is unsubstituted.

FIG. 1

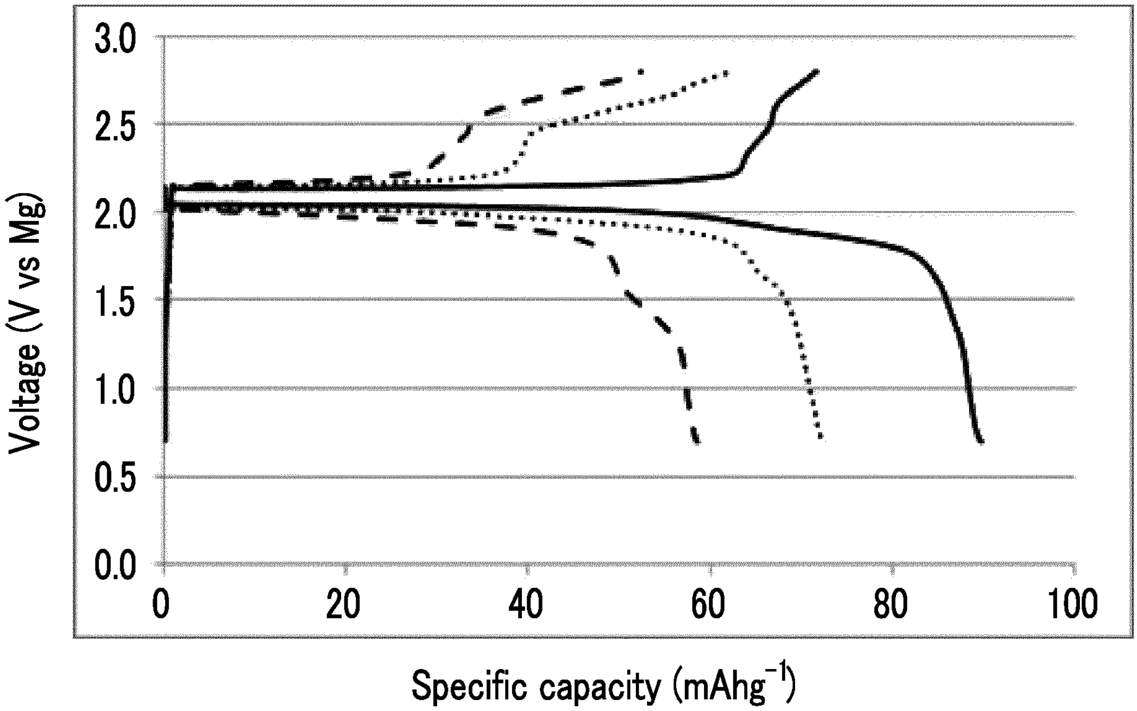
3.0
2.5
2.0
1.5
1.0
0.5
0.0
Voltage (V vs Mg)
0
20
40
60
80
100
Specific capacity (mAhg-1)

FIG. 2

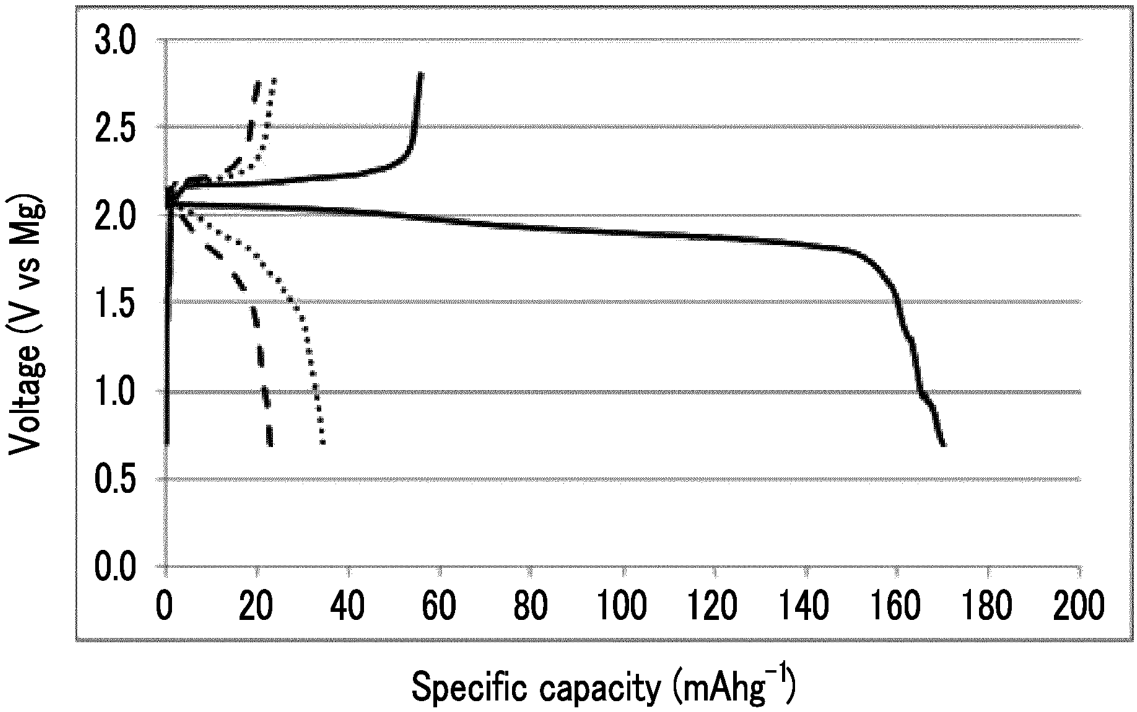
3.0
2.5
2.0
1.5
1.0
0.5
0.0
Voltage (V vs Mg)
0
20
40
60
80
100
120
140
160
180
200
Specific capacity (mAhg-1)

FIG. 3

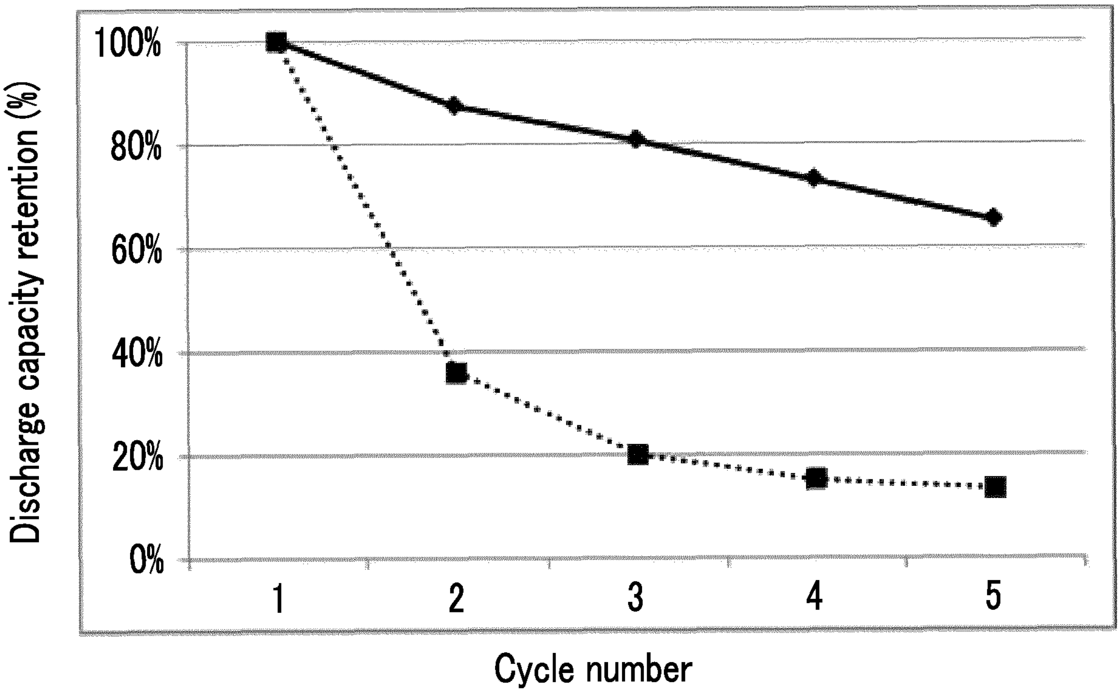
Discharge capacity retention (%)
100%
80%
60%
40%
20%
0%
1
2
3
4
5
Cycle number

FIG. 4

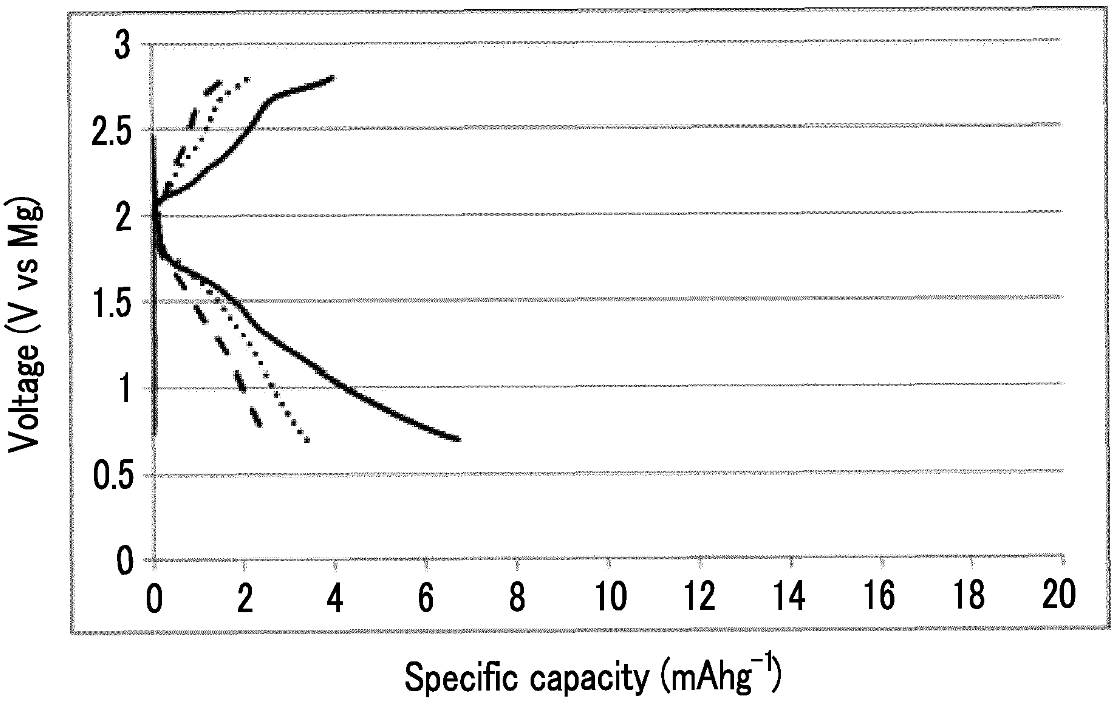
Voltage (V vs Mg)
3
2.5
2
1.5
1
0.5
0
0
2
4
6
8
10
12
14
16
18
20
Specific capacity (mAhg⁻¹)

FIG. 5

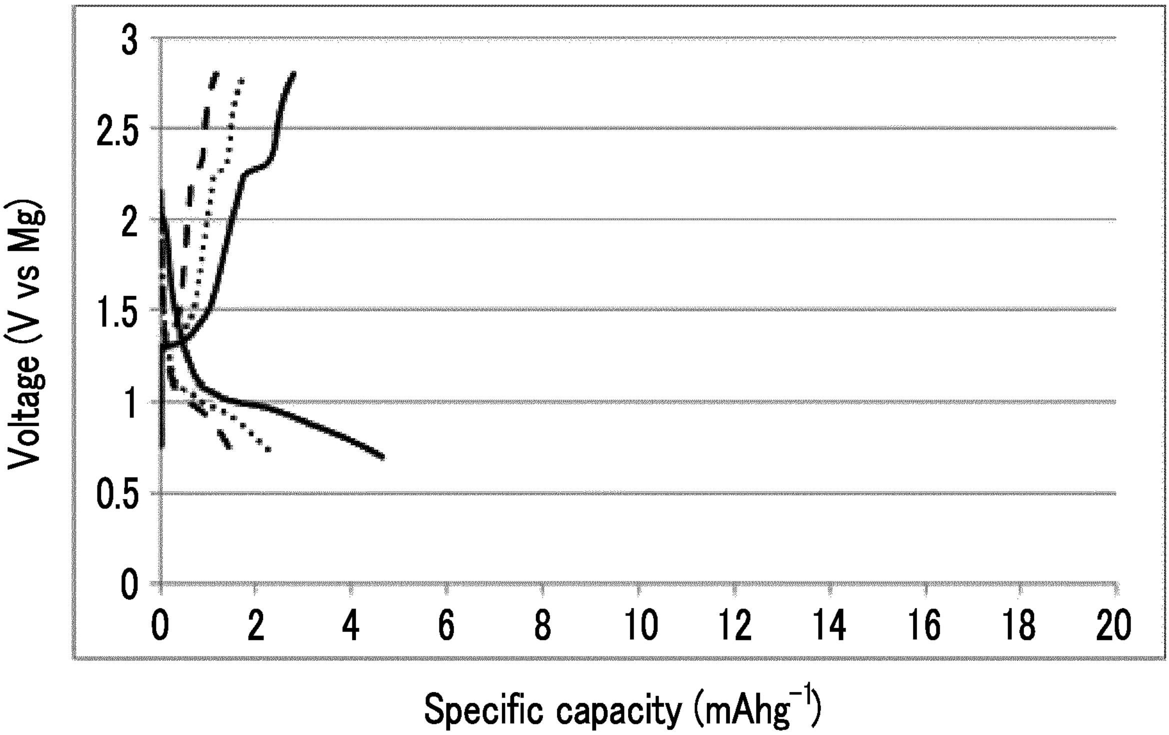
Voltage (V vs Mg)
3
2.5
2
1.5
1
0.5
0
0
2
4
6
8
10
12
14
16
18
20
Specific capacity (mAhg$^{-1}$)

**INTERNATIONAL SEARCH REPORT**

International application No.
PCT/JP2019/029725

A. CLASSIFICATION OF SUBJECT MATTER
Int.Cl. H01M4/58(2010.01)i, H01G11/30(2013.01)i, H01G11/62(2013.01)i, H01M4/136(2010.01)i, H01M4/1397(2010.01)i, H01M4/62(2006.01)i, H01M6/16(2006.01)i, H01M10/054(2010.01)i, H01M10/0568(2010.01)i, H01M12/08(2006.01)i

According to International Patent Classification (IPC) or to both national classification and IPC

B. FIELDS SEARCHED

Minimum documentation searched (classification system followed by classification symbols)
Int.Cl. H01M4/58, H01M4/62, H01M4/136, H01M4/1397, H01M10/054, H01M10/0564-10/0569, H01G11/30, H01G11/62, H01M6/16, H01M12/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN), Wiley Online Library

C. DOCUMENTS CONSIDERED TO BE RELEVANT

| Category* | Citation of document, with indication, where appropriate, of the relevant passages | Relevant to claim No. |
|---|---|---|
| Y | JP 2014-511161 A (PELLION TECHNOLOGIES INC.) 12 May 2014, paragraphs [0003]-[0004], [0046]-[0050] & US 2011/0159381 A1, paragraphs [0002]-[0003], [0050]-[0054] & WO 2012/122080 A1 & EP 2684240 A1 & AU 2012225715 A & CA 2829342 A & CN 103534853 A & KR 10-2013-0143649 A & MX 2013010282 A | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 October 2019 (24.10.2019) | 05 November 2019 (05.11.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/029725

C (Continuation). DOCUMENTS CONSIDERED TO BE RELEVANT

| Category* | Citation of document, with indication, where appropriate, of the relevant passages | Relevant to claim No. |
|---|---|---|
| Y | JP 54-075532 A (HITACHI, LTD.) 16 June 1979, page 1, left column, lines 9-10, page 1, right column, lines 1-18, page 2, upper left column, lines 2-14 (Family: none) | 1-7 |
| Y | WO 2017/170976 A1 (WAKO PURE CHEMICAL INDUSTRIES, LTD.) 05 October 2017, paragraphs [0001], [0006]-[0008], [0234] & US 2019/0131657 A1, paragraphs [0001], [0016]-[0020], [0376] & EP 3439097 A1 & CN 108780924 A & KR 10-2018-0126569 A & TW 201810789 A | 6-7 |
| Y | WO 2016/084924 A1 (WAKO PURE CHEMICAL INDUSTRIES, LTD.) 02 June 2016, paragraphs [0001], [0011]-[0012] & US 2017/0331154 A1, paragraphs [0001], [0014]-[0017] & EP 3226340 A1 & CN 107004906 A & KR 10-2017-0089890 A & TW 201628251 A & PL 3226340 T | 6 |
| Y | WO 2017/204322 A1 (WAKO PURE CHEMICAL INDUSTRIES, LTD.) 30 November 2017, paragraphs [0001], [0011]-[0012] & EP 3467931 A1, paragraphs [0001], [0011]-[0012] & KR 10-2019-0011253 A & CN 109417202 A & TW 201806961 A | 6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016051519 A
- WO 2016084924 A
- WO 2017170976 A
- WO 2017204322 A
- JP 2018246327 A


### Non-patent literature cited in the description


- *Nature,* 2000, vol. 407, 724-727
- *Chem. Commun.,* 2015, vol. 51, 1487-1490